# EUROPEAN PATENT APPLICATION

(11) **EP 4 135 444 A1**
(43) Date of publication of application: **15.02.2023**
(21) Application number: 21784041.2
(22) Date of filing: 08.04.2021
(51) Int. Cl.: H04W 72/04

(54) **SIGNAL PROCESSING METHOD AND APPARATUS, AND TERMINAL AND NETWORK NODE**

(30) Priority: 10.04.2020 CN 202010280857
(71) Applicant: Datang Mobile Communications Equipment Co., Ltd., Beijing 100085 (CN)
(72) Inventor: REN, Xiaotao, Beijing 100083 (CN); REN, Bin, Beijing 100083 (CN); DA, Ren, Beijing 100083 (CN); LI, Hui, Beijing 100083 (CN); LI, Gang, Beijing 100083 (CN); ZHAO, Zheng, Beijing 100083 (CN); FANG, Rongyi, Beijing 100083 (CN); ZHANG, Zhenyu, Beijing 100083 (CN)
(74) Representative: dompatent von Kreisler Selting Werner - Partnerschaft von Patent- und Rechtsanwälten mbB
(86) International application number: PCT/CN2021/085963
(87) International publication number: WO 2021/204201

(57) **Abstract**

Embodiments of the present disclosure provide a signal processing method, a signal processing device, a terminal and a network node. The signal processing method includes determining to drop the SRS-Pos or the first channel on overlapped OFDM symbols according to first information in the case that OFDM symbols occupied by an uplink positioning reference signal SRS-Pos overlap OFDM symbols occupied by a first channel; the first channel includes: PUSCH and/or PUCCH; the first information includes: at least one of a resource type of the SRS-Pos, a content carried by the first channel, or indication information configured by a network node; the indication information is related to dropping a signal on the overlapped OFDM symbols.

## Description

### CROSS-REFERENCE TO RELATED APPLICATION

This application claims priorities of the Chinese patent application No. 202010280857.9 filed on April 10, 2020, which are incorporated herein by reference in their entireties.

### TECHNICAL FIELD

The present disclosure relates to the field of communications technology, in particular to a signal processing method, a signal processing device, a terminal and a network node.

### BACKGROUND

In an uplink positioning scheme, the Sounding Reference Signal (SRS)-Position (Pos) signal is an important positioning reference signal, and the SRS-Pos signal can be configured independently based on different terminals (User Equipment, UE), different bandwidth and time domain resources can be configured, and the SRS-Pos signal can be transmitted in different beam directions.

In the uplink positioning process, the SRS-Pos signal sent by the UE will be received by a plurality of surrounding base stations, and different base stations have different distances from the UE, so different SRS-Pos transmission powers are required. In the same way, different base stations requires the UE to transmit the SRS-Pos signal in different beam directions in different geographic directions. More importantly, when the SRS-Pos signal reaches the base station receiver, the base station needs to be able to accurately monitor and detect the SRS-Pos signal, so as to further perform estimation on the time delay and the angle.

In the process of monitor and detection, a key condition is that the received signal to interference plus noise ratio (SINR) of the SRS-Pos signal is high, so as to ensure the precision and precision of positioning. It is required that SRS-Pos will occupy more Orthogonal Frequency Division Multiplexing (OFDM) symbols. In New Radio (NR) Access Technology, one SRS-Pos resource can occupy f 1, 2, 4, 8, 12} symbols, which can occupy up to 12 OFDM symbols. Since there are only 14 OFDM symbols in one slot, the SRS-Pos signal is likely to occur collision in the time domain with the Physical Uplink Shared Channel (PUSCH) and/or the Physical Uplink Control Channel (PUCCH), that is, overlapping transmissions on some OFDM symbols will occur.

In this regard, in the transmission rule of the relevant SRS-Pos signal, when the SRS-Pos signal collides with the PUSCH, the SRS-Pos signal is dropped and the PUSCH is transmitted directly on the collided OFDM symbol. However, this simple processing scheme cannot effectively deal with various complex scenarios, such as high-precision and low-delay positioning scenarios or ultra-reliable and low-delay communication (URLLC) transmission scenarios. Therefore, how to choose a more effective collision processing method according to different scenarios to meet the needs of various scenarios is an important issue.

Specifically, the relevant signal processing solutions cannot guarantee the required performance and cannot meet the requirements of different scenarios.

### SUMMARY

Embodiments of the present disclosure provide a signal processing method, a signal processing device, a terminal and a network node, so as to solve the problem that the signal processing solution in the related art cannot guarantee the required performance and cannot meet the requirements of different scenarios.

In order to solve the above technical problem, an embodiment of the present disclosure provide a signal processing method, applied to a terminal and includes: in the case that Orthogonal Frequency Division Multiplexing (OFDM) symbols occupied by an uplink positioning reference signal Sounding Reference Signal-Position (SRS-Pos) overlap OFDM symbols occupied by a first channel, determining to drop the SRS-Pos or the first channel on overlapped OFDM symbols according to first information; wherein, the first channel includes: a physical uplink shared channel (PUSCH) and/or a physical uplink control channel (PUCCH); the first information includes: at least one of a resource type of the SRS-Pos, a content carried by the first channel, or indication information configured by a network node; the indication information is related to dropping a signal on the overlapped OFDM symbols.

Optionally, the determining to drop the SRS-Pos or the first channel on overlapped OFDM symbols according to first information includes: in the case that the resource type is an aperiodic type, transmitting the SRS-Pos on the overlapped OFDM symbols, and dropping the first channel; and/or, in the case that the resource type is a periodic type or a semi-persistent type, or the resource type is not configured, transmitting the first channel on the overlapped OFDM symbols, and dropping the SRS-Pos.

Optionally, determining to drop the SRS-Pos or the first channel on overlapped OFDM symbols according to first information includes: determining to drop the SRS-Pos or the first channel on overlapped OFDM symbols according to whether the first channel carries uplink control information (UCI); or determining to drop the SRS-Pos or the first channel on overlapped OFDM symbols according to reporting information content carried by the first channel.

Optionally, the determining to drop the SRS-Pos or the first channel on overlapped OFDM symbols according to whether the first channel carries uplink control information (UCI) includes: in the case that the first channel does not carry the UCI, transmitting the SRS-Pos on the overlapped OFDM symbols, and dropping the first channel; in the case that the first channel carries the UCI, transmitting the first channel on the overlapped OFDM symbols, and dropping the SRS-Pos.

Optionally, the determining to drop the SRS-Pos or the first channel on overlapped OFDM symbols according to reporting information content carried by the first channel includes: in the case that the first channel only carries first report information, transmitting the SRS-Pos on the overlapped OFDM symbols, and dropping the first channel; wherein, the first reporting information is any one of the following information: semi-persistent channel state indication (CSI) or periodic CSI reporting information; semi-persistent layer 1 reference signal received power (L 1-RSRP) or periodic L1-RSRP reporting information; layer 1 signal to interference plus noise ratio (L1-SINR) reporting information.

Optionally, the UCI includes: at least one of a hybrid automatic repeat request acknowledgement (HARQ-ACK), a link recovery request (LRR), or a scheduling request (SR).

Optionally, the indication information comprises: first indication information; or, second indication information; or, the first indication information and the second indication information; or, the first indication information, the second indication information and third indication information; wherein the first indication information is used to indicate whether a positioning delay requirement is at least one of high precision and low delay; the second indication information is used to indicate a priority of the first channel; the third indication information is used to indicate priorities of the first indication information and the second indication information.

Optionally, the determining to drop the SRS-Pos or the first channel on the overlapped OFDM symbols according to the first information includes: in the case that the first indication information indicate that the positioning delay requirement is at least one of high precision and low delay, transmitting the SRS-Pos on the overlapped OFDM symbols, and dropping the first channel; in the case that the first indication information indicates that the positioning delay requirement is not at least one of the high-precision and low delay, or the first indication information is not configured, performing the following operation: transmitting the first channel on the overlapped OFDM symbols, and dropping the SRS-Pos; or, performing a first operation according to the resource type or the content to determine to drop the SRS-Pos or the first channel, wherein, the first indication information is represented by at least 1 bit.

Optionally, in the case that a bit value of the bit occupied by the first indication information is configured as 1, it indicates that the positioning delay requirement is at least one of high precision and low delay; in the case that the bit value of the bit occupied by the first indication information is configured as 0, it indicates that the positioning delay requirement is not at least one of high precision and low delay.

Optionally, before determining to drop the SRS-Pos or the first channel on the overlapped OFDM symbols according to the first information, the method further includes: receiving downlink control information (DCI) from the network node; obtaining or not obtaining the first indication information from the DCI; in the case that the first indication information is not obtained from the DCI, indicating that the first indication information indicates that the positioning delay requirement is not at least one of high precision and low delay.

Optionally, whether the first indication information appears in the DCI is configured by radio resource control (RRC).

Optionally, the determining, to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, performing the following operations: transmitting the SRS-Pos on the overlapped OFDM symbols, and dropping the first channel; or, performing the first operation according to the resource type or the content to determine to drop the SRS-Pos or the first channel, wherein, the second indication information is represented by at least 1 bit.

Optionally, when a bit value of the bit occupied by the second indication information is configured as 1, it indicates that the first channel has a high priority; when the bit value of the bit occupied by the second indication information is configured as 0, it indicates that the first channel does not have a high priority.

Optionally, before determining to drop the SRS-Pos or the first channel on the overlapped OFDM symbols according to the first information, the method further includes: receiving DCI from the network node; obtaining or not obtaining the second indication information from the DCI; in the case that the second indication information is not obtained from the DCI, indicating that the second indication information indicates that the first channel does not have a high priority.

Optionally, whether the second indication information appears in the DCI is configured by RRC.

Optionally, in the case that both the first indication information and the second indication information apear in the DCI, the determining to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, determining to drop the SRS-Pos or the first channel on the overlapped OFDM symbols according to the first indication information.

Optionally, the determining to drop the SRS-Pos or the first channel on the overlapped OFDM symbols according to the first indication information includes: in the case that the first indication information indicates that the positioning delay requirement is at least one of high precision and low delay, transmitting the SRS-Pos on the overlapped OFDM symbols, and dropping the first channel; in the case that the first indication information indicates that the positioning delay requirement is not at least one of high precision and low delay, or the first indication information is not configured, performing the following operations: transmitting the first channel on the overlapped OFDM symbols, and dropping the SRS-Pos; or, performing a first operation according to the resource type or the content to determine to drop the SRS-Pos or the first channel.

Optionally, when both the first indication information and the second indication information appear in the received DCI, the determining to drop the SRS-Pos or the first channel on the overlapped OFDM symbols according to the first information, includes: in the case that the first indication information indicates that the positioning delay requirement is at least one of high precision and low delay, transmitting the SRS-Pos on overlapped OFDM symbols and dropping the first channel; in the case that the first indication information indicates that the positioning delay requirement is not at least one of high precision and low delay, or the first indication information is not configured, determining to drop the SRS-Pos or the first channel on the overlapped OFDM symbols according to the second indication information.

Optionally, the determining to drop the SRS-Pos or the first channel on the overlapped OFDM symbols according to the second indication information includes: in the case that the second indication information indicate that the first channel has a high priority, transmitting the first channel on the overlapped OFDM symbols, and dropping the SRS-Pos; in the case that the second indication information indicates that the first channel does not have a high priority, or the second indication information is not configured, performing the following operations: transmitting the SRS-Pos on the overlapped OFDM symbols, and dropping the first channel; or, performing the first operation according to the resource type or the content to determine to drop the SRS-Pos or the first channel.

Optionally, the determining to drop the SRS-Pos or the first channel on the overlapped OFDM symbols according to the first information includes: in the case that the second indication information indicates that the first channel has a high priority, and the first indication information indicates that the positioning delay requirement is not at least one of high precision and low delay, transmitting the first channel on the overlapped OFDM symbols, and dropping the SRS- Pos; in the case that the second indication information indicates that the first channel does not have a high priority, and the first indication information indicates that the positioning delay requirement is at least one of high precision and low delay, transmitting the SRS-Pos on the overlapped OFDM symbols, and dropping the first channel; in the case that the second indication information indicates that the first channel has a high priority, and the first indication information indicates the positioning delay requirement is at least one of high precision and low delay, determining to drop the SRS-Pos or the first channel on the overlapped OFDM symbols according to the third indication information; in the case that the second indication information indicates that the first channel does not have a high priority, and the first indication information indicates that the positioning delay requirement is not at least one of high precision and low delay, determining to drop the SRS-Pos or the first channel on the overlapped OFDM symbol according to the third indication information.

Optionally, the determining to drop the SRS-Pos or the first channel on the overlapped OFDM symbols according to the third indication information includes: in the case that the third indication information indicates the first indication information has a high priority, performing the following operations: transmitting the SRS-Pos on the overlapped OFDM symbols, and dropping the first channel; or performing a first operation according to the resource type or the content to determine to drop the SRS-Pos or the first channel; in the case that the third indication information indicates that the second indication information has a high priority, performing the following operations: transmitting the first channel on the overlapped OFDM symbols, and dropping the SRS-Pos; or, performing the first operation according to the resource type or the content to determine to drop the SRS-Pos or the first channel.

Optionally, when a bit value of the bit occupied by the third indication information is configured as 1, it indicates that a priority of the first indication information is higher than a priority of the second indication information; when the bit value of the bit occupied by the third indication information is configured as 0, it indicates that the priority of the second indication information is higher than the priority of the first indication information.

Optionally, the performing the first operation according to the resource type or the content to determine to drop the SRS-Pos or the first channel includes: when the resource type is an aperiodic type, transmitting the SRS-Pos on the overlapped OFDM symbols and dropping the first channel.

Optionally, the performing the first operation according to the resource type or the content to determine to drop the SRS-Pos or the first channel includes: when the resource type is a periodic type or a semi-persistent type, or the resource type is not configured, transmitting the first channel on the overlapped OFDM symbols, and dropping the SRS-Pos.

Optionally, the performing the first operation according to the resource type or the content to determine to drop the SRS-Pos or the first channel includes: determining to drop the SRS-Pos or the first channel on the overlapped OFDM symbols according to whether the first channel carries the UCI; or, determining to drop the SRS-Pos or the first channel on the overlapped OFDM symbols according to reporting information content carried by the first channel.

Optionally, the determining to drop the SRS-Pos or the first channel on the overlapped OFDM symbols according to whether the first channel carries the UCI includes: in the case that the first channel does not carry the UCI, transmitting the SRS-Pos on the overlapped OFDM symbols and dropping the first channel; in the case that the first channel carries the UCI, transmitting the first channel on the overlapped OFDM symbols and dropping the SRS-Pos.

Optionally, the UCI includes: at least one of a hybrid automatic repeat request acknowledgment (HARQ-ACK), a link recovery request (LRR) or a scheduling request (SR).

Optionally, the determining to drop the SRS-Pos or the first channel on the overlapped OFDM symbols according to reporting information content carried by the first channel includes: in the case that the first channel carries only first reporting information, transmitting the SRS-Pos on the overlapped OFDM symbols, and dropping the first channel; wherein the first reporting information is any one of the following information: a semi-persistent CSI or periodic CSI reporting information; semi-persistent layer 1 reference signal received power (L1-RSRP) or periodic L1-RSRP reporting information; layer 1 signal to interference plus noise ratio (L1-SINR) reporting information.

Optionally, the UCI comprises: at least one of HARQ-ACK, LRR or SR.

Optionally, the SRS-Pos is an aperiodic SRS-Pos.

An embodiment of the present disclosure provides a signal processing method, applied to a network node, includes: configuring indication information, and obtaining DCI according to the indication information; transmitting the DCI to a terminal; wherein, the indication information includes at least one of first indication information and second indication information; the first indication information is used to indicate whether a positioning delay requirement is at least one of high precision and low delay; the second indication information is used to indicate a priority of the first channel; OFDM symbols occupied by the first channel overlap OFDM symbols occupied by an uplink positioning reference signal SRS-Pos; the first channel includes: PUSCH and/or PUCCH.

Optionally, before obtaining the DCI according to the indication information, the method further includes: configuring whether the indication information appears in the DCI through RRC signaling.

Optionally, the first indication information is represented by at least 1 bit; and/or the second indication information is represented by at least 1 bit.

Optionally, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Optionally, when the bit value of the bit occupied by the second indication information is configured as 1, it indicates that the first channel has a high priority; when the bit value of the bit occupied by the second indication information is configured as 0, it indicates that the first channel does not have a high priority.

An embodiment of the present disclosure provides a terminal including a memory, a processor, a transceiver and a computer program stored on the memory and executed by the processor; wherein the processor implements the following steps when executing the program: in the case that Orthogonal Frequency Division Multiplexing (OFDM) symbols occupied by an uplink positioning reference signal Sounding Reference Signal-Position (SRS-Pos) overlap OFDM symbols occupied by a first channel, determining to drop the SRS-Pos or the first channel on overlapped OFDM symbols according to first information; wherein, the first channel includes: a physical uplink shared channel (PUSCH) and/or a physical uplink control channel (PUCCH); the first information includes: at least one of a resource type of the SRS-Pos, a content carried by the first channel, or indication information configured by a network node; the indication information is related to dropping a signal on the overlapped OFDM symbols.

Optionally, the processor is specifically configured to: in the case that the resource type is an aperiodic type, transmit the SRS-Pos on the overlapped OFDM symbols, and drop the first channel; and/or, the processor is specifically configured to: in the case that the resource type is a periodic type or a semi-persistent type, or the resource type is not configured, transmitting the first channel on the overlapped OFDM symbols, and dropping the SRS-Pos.

Optionally, the processor is specifically configured to: determine to drop the SRS-Pos or the first channel on overlapped OFDM symbols according to whether the first channel carries uplink control information (UCI); or determine to drop the SRS-Pos or the first channel on overlapped OFDM symbols according to reporting information content carried by the first channel.

Optionally, the processor is specifically configured to: in the case that the first channel does not carry the UCI, transmit the SRS-Pos on the overlapped OFDM symbols, and drop the first channel; in the case that the first channel carries the UCI, transmit the first channel on the overlapped OFDM symbols, and drop the SRS-Pos.

Optionally, the processor is specifically configured to: in the case that the first channel only carries the first report information, transmit the SRS-Pos on the overlapped OFDM symbols, and drop the first channel; wherein, the first reporting information is any one of the following information: semi-persistent channel state indication (CSI) or periodic CSI reporting information; semi-persistent layer 1 reference signal received power (L1-RSRP) or periodic L1-RSRP reporting information; layer 1 signal to interference plus noise ratio (L1-SINR) reporting information.

Optionally, the UCI includes: at least one of HARQ-ACK, LRR, ort SR.

Optionally, the indication information includes: first indication information; or, second indication information; or, the first indication information and the second indication information; or, the first indication information, the second indication information and third indication information; wherein the first indication information is used to indicate whether the positioning delay requirement is at least one of high precision and low delay; the second indication information is used to indicate a priority of the first channel; the third indication information is used to indicate priorities of the first indication information and the second indication information.

Optionally, the processor is specifically configured to: in the case that the first indication information indicate that the positioning delay requirement is at least one of high precision and low delay, transmit the SRS-Pos on the overlapped OFDM symbols, and drop the first channel; in the case that the first indication information indicates that the positioning delay requirement is not at least one of the high-precision and low delay, or the first indication information is not configured, transmit the first channel on overlapped OFDM symbols, and drop the SRS-Pos; or, perform a first operation according to the resource type or the content to determine to drop the SRS-Pos or the first channel, the first indication information is represented by at least 1 bit.

Optionally, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Optionally, the processor is further configured to: receive downlink control information (DCI) from the network node; obtain or not obtain the first indication information from the DCI; in the case that the first indication information is not obtained from the DCI, it means that the first indication information indicates that the positioning delay requirement is not at least one of high precision and low delay.

Optionally, whether the first indication information appearing in the downlink control information (DCI) is configured by radio resource control (RRC).

Optionally, the processor is specifically configured to: in the cast that the second indication information indicates that the first channel has a high priority, transmit the first channel on the overlapped OFDM symbols, and drop the SRS-Pos; in the case that the second indication information indicates that the first channel does not have a high priority, or the second indication information is not configured, transmit the SRS-Pos on the overlapped OFDM symbols, and drop the first channel; or, perform the first operation according to the resource type or the content to determine to drop the SRS-Pos or the first channel, the second indication information is represented by at least 1 bit.

Optionally, when a bit value of the bit occupied by the second indication information is configured as 1, it indicates that the first channel has a high priority; when the bit value of the bit occupied by the second indication information is configured as 0, it indicates that the first channel does not have a high priority.

Optionally, the processor is further configured to: receive downlink control information (DCI) from the network node; obtain or not obtain the second indication information from the DCI; in the case that the second indication information is not obtained from the DCI, it means that the second indication information indicates that the first channel does not have a high priority.

Optionally, whether the second indication information is in the downlink control information (DCI) is configured by radio resource control (RRC).

Optionally, in the case that both the first indication information and the second indication information are in the downlink control information (DCI), the determining to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, determining to drop the SRS-Pos or the first channel on the overlapped OFDM symbols according to the first indication information.

Optionally, the processor is specifically configured to: in the case that the first indication information indicates that the positioning delay requirement is at least one of high precision and low delay, transmit the SRS-Pos on the overlapped OFDM symbols, and drop the first channel; in the case that the first indication information indicates that the positioning delay requirement is not at least one of high precision and low delay, or the first indication information is not configured, perform the following operations: transmitting the first channel on the overlapped OFDM symbols, and dropping the SRS-Pos; or, performing a first operation according to the resource type or the content to determine to drop the SRS-Pos or the first channel.

Optionally, when both the first indication information and the second indication information are in the received downlink control information (DCI), the determining to drop the SRS-Pos or the first channel on the overlapped OFDM symbols according to the first information, includes: in the case that the first indication information indicates that the positioning delay requirement is at least one of high precision and low delay, transmitting the SRS-Pos on overlapped OFDM symbols and dropping the first channel; in the case that the first indication information indicates that the positioning delay requirement is not at least one of high precision and low delay, or the first indication information is not configured, determining to drop the SRS-Pos or the first channel on the overlapped OFDM symbols according to the second indication information.

Optionally, the processor is specifically configured to: in the case that the second indication information indicate that the first channel has a high priority, transmit the first channel on the overlapped OFDM symbols, and drop the SRS-Pos; in the case that the second indication information indicates that the first channel does not have a high priority, or the second indication information is not configured, perform the following operations: transmitting the SRS-Pos on the overlapped OFDM symbols, and dropping the first channel; or, performing the first operation according to the resource type or the content to determine to drop the SRS-Pos or the first channel.

Optionally, the processor is specifically configured to: in the case that the second indication information indicates that the first channel has a high priority, and the first indication information indicates that the positioning delay requirement is not at least one of high precision and low delay, transmit the first channel on the overlapped OFDM symbols, and drop the SRS-Pos; in the case that the second indication information indicates that the first channel does not have a high priority, and the first indication information indicates that the positioning delay requirement is at least one of high precision and low delay, transmit the SRS-Pos on the overlapped OFDM symbols, and drop the first channel; in the case that the second indication information indicates that the first channel has a high priority, and the first indication information indicates the positioning delay requirement has at least one of high precision and low delay, determine to drop the SRS-Pos or the first channel on the overlapped OFDM symbols according to the third indication information; in the case that the second indication information indicates that the first channel does not have a high priority, and the first indication information indicates that the positioning delay requirement is not at least one of high precision and low delay, determine to drop the SRS-Pos or the first channel on the overlapped OFDM symbol according to the third indication information.

Optionally, the processor is specifically configured to: in the case that the third indication information indicates the first indication information has a high priority, perform the following operations: transmitting the SRS-Pos on the overlapped OFDM symbols, and dropping the first channel; or performing a first operation according to the resource type or the content to determine to drop the SRS-Pos or the first channel; in the case that the third indication information indicates that the second indication information has a high priority, perform the following operations: transmitting the first channel on the overlapped OFDM symbols, and dropping the SRS-Pos; or, performing the first operation according to the resource type or the content to determine to drop the SRS-Pos or the first channel.

Optionally, when a bit value of the bit occupied by the third indication information is configured as 1, it indicates that the priority of the first indication information is higher than the priority of the second indication information; when a bit value of the bit occupied by the third indication information is configured as 0, it indicates that the priority of the second indication information is higher than the priority of the first indication information.

Optionally, the processor is specifically configured to: when the resource type is an aperiodic type, transmit the SRS-Pos on the overlapped OFDM symbols and drop the first channel.

Optionally, the processor is specifically configured to: when the resource type is a periodic type or a semi-persistent type, or the resource type is not configured, transmitting the first channel on the overlapped OFDM symbols, and dropping the SRS-Pos.

Optionally, the processor is specifically configured to: determine to drop the SRS-Pos or the first channel on the overlapped OFDM symbols according to whether the first channel carries the uplink control information (UCI); or, determining to drop the SRS-Pos or the first channel on the overlapped OFDM symbols according to the reporting information content carried by the first channel.

Optionally, the processor is specifically configured to: in the case that the first channel does not carry the UCI, transmit the SRS-Pos on the overlapped OFDM symbols and dropping the first channel; in the case that the first channel carries the UCI, transmit the first channel on the overlapped OFDM symbols and drop the SRS-Pos.

Optionally, the UCI includes: at least one of a hybrid automatic repeat request acknowledgment (HARQ-ACK), a link recovery request (LRR) or a scheduling request (SR).

Optionally, the processor is specifically configured to: in the case that the first channel carries only the first reporting information, transmit the SRS-Pos on the overlapped OFDM symbols, and drop the first channel; wherein the first reporting information is any one of the following information: a semi-persistent CSI or periodic CSI reporting information; semi-persistent layer 1 reference signal received power (L1-RSRP) or periodic L1-RSRP reporting information; layer 1 signal to interference plus noise ratio (L1-SINR) reporting information.

Optionally, the UCI includes: at least one of HARQ-ACK, LRR or SR.

Optionally, the SRS-Pos is an aperiodic SRS-Pos.

An embodiment of the present disclosure provides a network node including a memory, a processor, a transceiver, and a computer program stored on the memory and executed by the processor; wherein the processor implements the following steps when executing the program: configuring indication information, and obtaining DCI according to the indication information; transmitting the DCI to a terminal; wherein, the indication information includes at least one of first indication information and second indication information; the first indication information is used to indicate whether a positioning delay requirement is at least one of high precision and low delay; the second indication information is used to indicate a priority of the first channel; OFDM symbols occupied by the first channel overlap OFDM symbols occupied by an uplink positioning reference signal SRS-Pos; the first channel includes: PUSCH and/or PUCCH.

Optionally, the processor is further configured to configure whether the indication information is in the DCI through radio resource control (RRC) signaling before obtaining the downlink control information DCI according to the indication information.

Optionally, the first indication information is represented by at least 1 bit; and/or the second indication information is represented by at least 1 bit.

Optionally, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Optionally, when the bit value of the bit occupied by the second indication information is configured as 1, it indicates that the first channel has a high priority; when the bit value of the bit occupied by the second indication information is configured as 0, it indicates that the first channel does not have a high priority.

An embodiment of the present disclosure provides a computer-readable storage medium on which a computer program is stored, wherein the program, when executed by a processor, implements the steps of the signal processing method.

An embodiment of the present disclosure provides a signal processing device, applied to a terminal, includes: a first determination module, configured to, in the case that Orthogonal Frequency Division Multiplexing (OFDM) symbols occupied by an uplink positioning reference signal Sounding Reference Signal-Position (SRS-Pos) overlap OFDM symbols occupied by a first channel, determine to drop the SRS-Pos or the first channel on overlapped OFDM symbols according to first information; wherein, the first channel includes: a physical uplink shared channel (PUSCH) and/or a physical uplink control channel (PUCCH); the first information includes: at least one of a resource type of the SRS-Pos, a content carried by the first channel, or indication information configured by a network node; the indication information is related to dropping a signal on the overlapped OFDM symbols.

Optionally, the first determination module includes: a first processing sub-module, configured to, in the case that the resource type is an aperiodic type, transmit the SRS-Pos on the overlapped OFDM symbols, and dropping the first channel; and/or, a second processing sub-module, configured to, in the case that the resource type is a periodic type or a semi-persistent type, or the resource type is not configured, transmitting the first channel on the overlapped OFDM symbols, and dropping the SRS-Pos.

Optionally, the first determination module includes: a third processing sub-module, configured to determine to drop the SRS-Pos or the first channel on overlapped OFDM symbols according to whether the first channel carries uplink control information (UCI); or determine to drop the SRS-Pos or the first channel on overlapped OFDM symbols according to reporting information content carried by the first channel.

Optionally, the determining to drop the SRS-Pos or the first channel on overlapped OFDM symbols according to whether the first channel carries uplink control information (UCI) includes: in the case that the first channel does not carry the UCI, transmitting the SRS-Pos on the overlapped OFDM symbols, and dropping the first channel; in the case that the first channel carries the UCI, transmitting the first channel on the overlapped OFDM symbols, and dropping the SRS-Pos.

Optionally, the determining to drop the SRS-Pos or the first channel on overlapped OFDM symbols according to reporting information content carried by the first channel includes: in the case that the first channel only carries the first report information, transmitting the SRS-Pos on the overlapped OFDM symbols, and dropping the first channel; wherein, the first reporting information is any one of the following information: semi-persistent channel state indication (CSI) or periodic CSI reporting information; semi-persistent layer 1 reference signal received power (L 1-RSRP) or periodic L1-RSRP reporting information; layer 1 signal to interference plus noise ratio (L1-SINR) reporting information.

Optionally, the UCI includes: at least one of a hybrid automatic repeat request acknowledgement (HARQ-ACK), a link recovery request (LRR), or a scheduling request (SR).

Optionally, the indication information includes: first indication information; or, second indication information; or, the first indication information and the second indication information; or, the first indication information, the second indication information and third indication information; wherein the first indication information is used to indicate whether the positioning delay requirement is at least one of high precision and low delay; the second indication information is used to indicate a priority of the first channel; the third indication information is used to indicate priorities of the first indication information and the second indication information.

Optionally, the first determination module includes: a fourth processing sub-module, configured to, in the case that the first indication information indicate that the positioning delay requirement is at least one of high precision and low delay, transmit the SRS-Pos on the overlapped OFDM symbols, and dropping the first channel; in the case that the first indication information indicates that the positioning delay requirement is not at least one of the high-precision and low delay, or the first indication information is not configured, transmit the first channel on overlapped OFDM symbols, and drop the SRS-Pos; or, perform a first operation according to the resource type or the content to determine to drop the SRS-Pos or the first channel, the first indication information is represented by at least 1 bit.

Optionally, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Optionally, the signal processing device further includes: a first receiving module, configured to receive downlink control information (DCI) from the network node before determining to drop the SRS-Pos or the first channel on the overlapped OFDM symbols according to the first information; and a first processing module, configured to obtain or not obtain the first indication information from the DCI; in the case that the first indication information is not obtained from the DCI, indicate that the first indication information indicates that the positioning delay requirement is not at least one of high precision and low delay.

Optionally, whether the first indication information appearing in the downlink control information (DCI) is configured by radio resource control (RRC).

Optionally, the first determination module includes: a fifth processing sub-module, configured to, in the cast that the second indication information indicates that the first channel has a high priority, transmit the first channel on the overlapped OFDM symbols, and drop the SRS-Pos; in the case that the second indication information indicates that the first channel does not have a high priority, or the second indication information is not configured, transmit the SRS-Pos on the overlapped OFDM symbols, and drop the first channel; or, perform the first operation according to the resource type or the content to determine to drop the SRS-Pos or the first channel, the second indication information is represented by at least 1 bit.

Optionally, when a bit value of the bit occupied by the second indication information is configured as 1, it indicates that the first channel has a high priority; when the bit value of the bit occupied by the second indication information is configured as 0, it indicates that the first channel does not have a high priority.

Optionally, the signal processing device further includes: a second receiving module, configured to receive downlink control information (DCI) from the network node before determining to drop the SRS-Pos or the first channel on the overlapped OFDM symbols according to the first information; a second processing module, configured to obtain or not obtain the second indication information from the DCI; in the case that the second indication information is not obtained from the DCI, indicate that the second indication information indicates that the first channel does not have a high priority.

Optionally, whether the second indication information is in the downlink control information (DCI) is configured by radio resource control (RRC).

Optionally, in the case that both the first indication information and the second indication information are in the downlink control information (DCI), the determining to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, determining to drop the SRS-Pos or the first channel on the overlapped OFDM symbols according to the first indication information.

Optionally, the determining to drop the SRS-Pos or the first channel on the overlapped OFDM symbols according to the first indication information includes: in the case that the first indication information indicates that the positioning delay requirement is at least one of high precision and low delay, transmitting the SRS-Pos on the overlapped OFDM symbols, and dropping the first channel; in the case that the first indication information indicates that the positioning delay requirement is not at least one of high precision and low delay, or the first indication information is not configured, performing the following operations: transmitting the first channel on the overlapped OFDM symbols, and dropping the SRS-Pos; or, performing a first operation according to the resource type or the content to determine to drop the SRS-Pos or the first channel.

Optionally, when both the first indication information and the second indication information are in the received downlink control information (DCI), the determining to drop the SRS-Pos or the first channel on the overlapped OFDM symbols according to the first information, includes: in the case that the first indication information indicates that the positioning delay requirement is at least one of high precision and low delay, transmitting the SRS-Pos on overlapped OFDM symbols and dropping the first channel; in the case that the first indication information indicates that the positioning delay requirement is not at least one of high precision and low delay, or the first indication information is not configured, determining to drop the SRS-Pos or the first channel on the overlapped OFDM symbols according to the second indication information.

Optionally, the determining to drop the SRS-Pos or the first channel on the overlapped OFDM symbols according to the second indication information includes: in the case that the second indication information indicate that the first channel has a high priority, transmitting the first channel on the overlapped OFDM symbols, and dropping the SRS-Pos; in the case that the second indication information indicates that the first channel does not have a high priority, or the second indication information is not configured, performing the following operations: transmitting the SRS-Pos on the overlapped OFDM symbols, and dropping the first channel; or, performing the first operation according to the resource type or the content to determine to drop the SRS-Pos or the first channel.

Optionally, the first determination module includes: an eighth processing submodule, configured to, in the case that the second indication information indicates that the first channel has a high priority, and the first indication information indicates that the positioning delay requirement is not at least one of high precision and low delay, transmit the first channel on the overlapped OFDM symbols, and drop the SRS- Pos; in the case that the second indication information indicates that the first channel does not have a high priority, and the first indication information indicates that the positioning delay requirement is at least one of high precision and low delay, transmit the SRS-Pos on the overlapped OFDM symbols, and drop the first channel; in the case that the second indication information indicates that the first channel has a high priority, and the first indication information indicates the positioning delay requirement has at least one of high precision and low delay, determine to drop the SRS-Pos or the first channel on the overlapped OFDM symbols according to the third indication information; in the case that the second indication information indicates that the first channel does not have a high priority, and the first indication information indicates that the positioning delay requirement is not at least one of high precision and low delay, determine to drop the SRS-Pos or the first channel on the overlapped OFDM symbol according to the third indication information.

Optionally, the determining to drop the SRS-Pos or the first channel on the overlapped OFDM symbols according to the third indication information includes: in the case that the third indication information indicates the first indication information has a high priority, performing the following operations: transmitting the SRS-Pos on the overlapped OFDM symbols, and dropping the first channel; or performing a first operation according to the resource type or the content to determine to drop the SRS-Pos or the first channel; in the case that the third indication information indicates that the second indication information has a high priority, performing the following operations: transmitting the first channel on the overlapped OFDM symbols, and dropping the SRS-Pos; or, performing the first operation according to the resource type or the content to determine to drop the SRS-Pos or the first channel.

Optionally, when a bit value of the bit occupied by the third indication information is configured as 1, it indicates that the priority of the first indication information is higher than the priority of the second indication information; when a bit value of the bit occupied by the third indication information is configured as 0, it indicates that the priority of the second indication information is higher than the priority of the first indication information.

Optionally, the performing the first operation according to the resource type or the content to determine to drop the SRS-Pos or the first channel includes: when the resource type is an aperiodic type, transmitting the SRS-Pos on the overlapped OFDM symbols and dropping the first channel.

Optionally, the performing the first operation according to the resource type or the content to determine to drop the SRS-Pos or the first channel includes: when the resource type is a periodic type or a semi-persistent type, or the resource type is not configured, transmitting the first channel on the overlapped OFDM symbols, and dropping the SRS-Pos.

Optionally, the performing the first operation according to the resource type or the content to determine to drop the SRS-Pos or the first channel includes: determining to drop the SRS-Pos or the first channel on the overlapped OFDM symbols according to whether the first channel carries the uplink control information (UCI); or, determining to drop the SRS-Pos or the first channel on the overlapped OFDM symbols according to the reporting information content carried by the first channel.

Optionally, the determining to drop the SRS-Pos or the first channel on the overlapped OFDM symbols according to whether the first channel carries the uplink control information (UCI) includes: in the case that the first channel does not carry the UCI, transmitting the SRS-Pos on the overlapped OFDM symbols and dropping the first channel; in the case that the first channel carries the UCI, transmitting the first channel on the overlapped OFDM symbols and dropping the SRS-Pos.

Optionally, the UCI includes: at least one of a hybrid automatic repeat request acknowledgment (HARQ-ACK), a link recovery request (LRR) or a scheduling request (SR).

Optionally, the determining to drop the SRS-Pos or the first channel on the overlapped OFDM symbols according to the reporting information content carried by the first channel includes: in the case that the first channel carries only the first reporting information, transmitting the SRS-Pos on the overlapped OFDM symbols, and dropping the first channel; wherein the first reporting information is any one of the following information: a semi-persistent CSI or periodic CSI reporting information; semi-persistent layer 1 reference signal received power (L1-RSRP) or periodic L1-RSRP reporting information; layer 1 signal to interference plus noise ratio (L1-SINR) reporting information.

Optionally, the UCI includes: at least one of HARQ-ACK, LRR or SR.

Optionally, the SRS-Pos is an aperiodic SRS-Pos.

An embodiment of the present disclosure provides a signal processing device, applied to a network node, includes: a third processing module, configured to configure indication information, and obtaining DCI according to the indication information; a first transmitting module, configured to transmit the DCI to a terminal; wherein, the indication information includes at least one of first indication information and second indication information; the first indication information is used to indicate whether a positioning delay requirement is at least one of high precision and low delay; the second indication information is used to indicate a priority of the first channel; OFDM symbols occupied by the first channel overlap OFDM symbols occupied by an uplink positioning reference signal SRS-Pos; the first channel includes: PUSCH and/or PUCCH.

Optionally, the signal processing device further includes: a first configuration module, configured to configure whether the indication information is in the DCI through radio resource control (RRC) signaling.

Optionally, the first indication information is represented by at least 1 bit; and/or the second indication information is represented by at least 1 bit.

Optionally, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Optionally, when the bit value of the bit occupied by the second indication information is configured as 1, it indicates that the first channel has a high priority; when the bit value of the bit occupied by the second indication information is configured as 0, it indicates that the first channel does not have a high priority.

The above technical solution has the following beneficial effect.

In the signal processing method provided by some embodiments of the present disclosure, in the case that the OFDM symbols occupied by the uplink positioning reference signal SRS-Pos overlap the OFDM symbols occupied by the first channel, it is determined to drop the SRS-Pos or the first channel on the overlapped OFDM symbols according to the first information; it can flexibly select different processing methods when the OFDM symbols occupied by SRS-Pos overlap the OFDM symbols occupied by the first channel, to ensure the performance of the SRS-Pos used for the positioning calculation and meets the needs of different scenarios, which solves the problem that the signal processing scheme in the related art cannot guarantee the required performance and meet the needs of different scenarios.

### BRIEF DESCRIPTION OF THE DRAWINGS

FIG. 1 is a schematic flow chart of a signal processing method according to some embodiments of the present disclosure;
FIG. 2 is another schematic flowchart of a signal processing method according to some embodiments of the present disclosure;
FIG. 3 is a schematic diagram of dropping PUSCH according to some embodiments of the present disclosure;
FIG. 4 is a schematic diagram of dropping the SRS-Pos signal according to some embodiments of the present disclosure;
FIG. 5 is a schematic structural diagram of a terminal according to some embodiments of the present disclosure;
FIG. 6 is a schematic diagram of a network node according to some embodiments of the present disclosure;
FIG. 7 is a schematic structural diagram of a signal processing device according to some embodiments of the present disclosure;
FIG. 8 is another schematic structural diagram of a signal processing device according to some embodiments of the present disclosure.

### DETAILED DESCRIPTION

In order to make the technical problems, technical solutions and advantages to be solved by the present disclosure more clear, detailed description will be given below with reference to the accompanying drawings and specific embodiments.

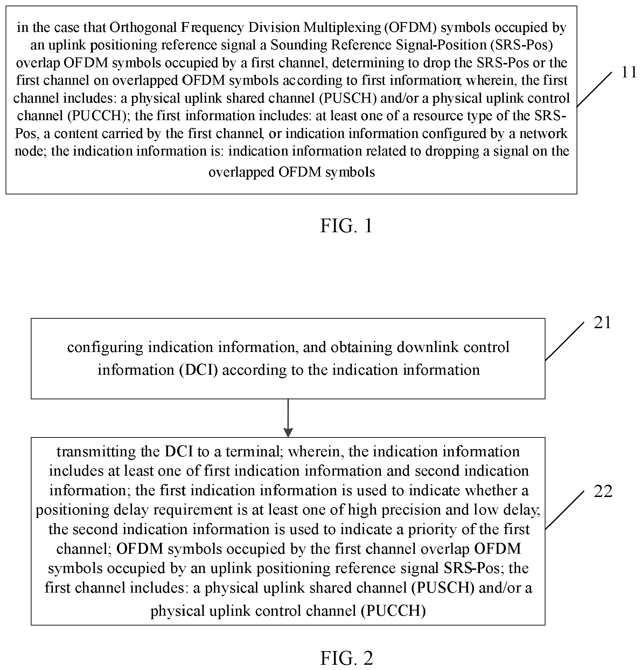

Aiming at the problem that the signal processing solution in the related art cannot guarantee the required performance and meet the requirements of different scenarios, the present disclosure provides a signal processing method, which is applied to a terminal. As shown in FIG. 1, the method includes:
Step 11: In the case that OFDM symbols occupied by a Sounding Reference Signal-Position (SRS-Pos) overlap OFDM symbols occupied by a first channel, determining to drop the SRS-Pos or the first channel on overlapped OFDM symbols according to first information;
Wherein, the first channel includes: a physical uplink shared channel (PUSCH) and/or a physical uplink control channel (PUCCH);
The first information includes: at least one of a resource type of the SRS-Pos, a content carried by the first channel, or indication information configured by a network node;
The indication information is: indication information related to dropping a signal on the overlapped OFDM symbols.

Specifically, the indication information is: indication information related to dropping the SRS-Pos or the first channel on the overlapped OFDM symbols.

In the signal processing method provided by some embodiments of the present disclosure, in the case that the OFDM symbols occupied by the uplink positioning reference signal SRS-Pos overlap the OFDM symbols occupied by the first channel, it is determined to drop the SRS-Pos or the first channel on the overlapped OFDM symbols according to the first information; it can flexibly select different processing methods when the OFDM symbols occupied by SRS-Pos overlap the OFDM symbols occupied by the first channel, to ensure the performance of the SRS-Pos used for the positioning calculation and meets the needs of different scenarios, which solves the problem that the signal processing scheme in the related art cannot guarantee the required performance and meet the needs of different scenarios.

The determining to drop the SRS-Pos or the first channel on overlapped OFDM symbols according to first information includes: in the case that the resource type is an aperiodic type, transmitting the SRS-Pos on the overlapped OFDM symbols, and dropping the first channel; and/or,

In the case that the resource type is a periodic type or a semi-persistent type, or the resource type is not configured, transmitting the first channel on the overlapped OFDM symbols, and dropping the SRS-Pos.

The determining to drop the SRS-Pos or the first channel on overlapped OFDM symbols according to first information includes: determining to drop the SRS-Pos or the first channel on overlapped OFDM symbols according to whether the first channel carries uplink control information (UCI); or determining to drop the SRS-Pos or the first channel on overlapped OFDM symbols according to reporting information content carried by the first channel.

Specifically, the determining to drop the SRS-Pos or the first channel on overlapped OFDM symbols according to whether the first channel carries uplink control information (UCI) includes: in the case that the first channel does not carry the UCI, transmitting the SRS-Pos on the overlapped OFDM symbols, and dropping the first channel; in the case that the first channel carries the UCI, transmitting the first channel on the overlapped OFDM symbols, and dropping the SRS-Pos.

Specifically, the determining to drop the SRS-Pos or the first channel on overlapped OFDM symbols according to reporting information content carried by the first channel includes: in the case that the first channel only carries the first report information, transmitting the SRS-Pos on the overlapped OFDM symbols, and dropping the first channel; wherein, the first reporting information is any one of the following information: semi-persistent channel state indication (CSI) or periodic CSI reporting information; semi-persistent layer 1 reference signal received power (L 1-RSRP) or periodic L1-RSRP reporting information; layer 1 signal to interference plus noise ratio (L1-SINR) reporting information.

In some embodiments of the present disclosure, the UCI includes: at least one of a hybrid automatic repeat request acknowledgement (HARQ-ACK), a link recovery request (LRR), or a scheduling request (SR).

Wherein, the indication information includes: first indication information; or, second indication information; or, the first indication information and the second indication information; or, the first indication information, the second indication information and third indication information; wherein the first indication information is used to indicate whether the positioning delay requirement is at least one of high precision and low delay; the second indication information is used to indicate a priority of the first channel; the third indication information is used to indicate priorities of the first indication information and the second indication information.

In some embodiments of the present disclosure, the determining to drop the SRS-Pos or the first channel on the overlapped OFDM symbols according to the first information includes: in the case that the first indication information indicate that the positioning delay requirement is at least one of high precision and low delay, transmitting the SRS-Pos on the overlapped OFDM symbols, and dropping the first channel; in the case that the first indication information indicates that the positioning delay requirement is not at least one of the high-precision and low delay, or the first indication information is not configured, transmitting the first channel on overlapped OFDM symbols, and dropping the SRS-Pos; or, performing a first operation according to the resource type or the content to determine to drop the SRS-Pos or the first channel.

Wherein, the first indication information is represented by at least 1 bit.

Specifically, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Further, before determining to drop the SRS-Pos or the first channel on the overlapped OFDM symbols according to the first information, the method further includes: receiving downlink control information (DCI) from the network node; obtaining or not obtaining the first indication information from the DCI; in the case that the first indication information is not obtained from the DCI, it means that the first indication information indicates that the positioning delay requirement is not at least one of high precision and low delay.

Specifically, whether the first indication information appearing in the downlink control information (DCI) is configured by radio resource control (RRC).

In some embodiments of the present disclosure, the determining, to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, transmitting the SRS-Pos on the overlapped OFDM symbols, and dropping the first channel; or, performing the first operation according to the resource type or the content to determine to drop the SRS-Pos or the first channel.

Wherein, the second indication information is represented by at least 1 bit.

Specifically, when a bit value of the bit occupied by the second indication information is configured as 1, it indicates that the first channel has a high priority; when the bit value of the bit occupied by the second indication information is configured as 0, it indicates that the first channel does not have a high priority.

Further, before determining to drop the SRS-Pos or the first channel on the overlapped OFDM symbols according to the first information, the method further includes: receiving downlink control information (DCI) from the network node; obtaining or not obtaining the second indication information from the DCI; in the case that the second indication information is not obtained from the DCI, it means that the second indication information indicates that the first channel does not have a high priority.

Specifically, whether the second indication information is in the downlink control information (DCI) is configured by radio resource control (RRC).

In some embodiments of the present disclosure, in the case that both the first indication information and the second indication information are in the downlink control information (DCI), the determining to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, determining to drop the SRS-Pos or the first channel on the overlapped OFDM symbols according to the first indication information.

Specifically, the determining to drop the SRS-Pos or the first channel on the overlapped OFDM symbols according to the first indication information includes: in the case that the first indication information indicates that the positioning delay requirement is at least one of high precision and low delay, transmitting the SRS-Pos on the overlapped OFDM symbols, and dropping the first channel; in the case that the first indication information indicates that the positioning delay requirement is not at least one of high precision and low delay, or the first indication information is not configured, performing the following operations: transmitting the first channel on the overlapped OFDM symbols, and dropping the SRS-Pos; or, performing a first operation according to the resource type or the content to determine to drop the SRS-Pos or the first channel.

In some embodiments of the present disclosure, when both the first indication information and the second indication information are in the received downlink control information (DCI), the determining to drop the SRS-Pos or the first channel on the overlapped OFDM symbols according to the first information, includes: in the case that the first indication information indicates that the positioning delay requirement is at least one of high precision and low delay, transmitting the SRS-Pos on overlapped OFDM symbols and dropping the first channel; in the case that the first indication information indicates that the positioning delay requirement is not at least one of high precision and low delay, or the first indication information is not configured, determining to drop the SRS-Pos or the first channel on the overlapped OFDM symbols according to the second indication information.

Specifically, the determining to drop the SRS-Pos or the first channel on the overlapped OFDM symbols according to the second indication information includes: in the case that the second indication information indicate that the first channel has a high priority, transmitting the first channel on the overlapped OFDM symbols, and dropping the SRS-Pos; in the case that the second indication information indicates that the first channel does not have a high priority, or the second indication information is not configured, performing the following operations: transmitting the SRS-Pos on the overlapped OFDM symbols, and dropping the first channel; or, performing the first operation according to the resource type or the content to determine to drop the SRS-Pos or the first channel.

In some embodiments of the present disclosure, the determining to drop the SRS-Pos or the first channel on the overlapped OFDM symbols according to the first information includes: in the case that the second indication information indicates that the first channel has a high priority, and the first indication information indicates that the positioning delay requirement is not at least one of high precision and low delay, transmitting the first channel on the overlapped OFDM symbols, and dropping the SRS- Pos; in the case that the second indication information indicates that the first channel does not have a high priority, and the first indication information indicates that the positioning delay requirement is at least one of high precision and low delay, transmitting the SRS-Pos on the overlapped OFDM symbols, and dropping the first channel; in the case that the second indication information indicates that the first channel has a high priority, and the first indication information indicates the positioning delay requirement has at least one of high precision and low delay, determining to drop the SRS-Pos or the first channel on the overlapped OFDM symbols according to the third indication information; in the case that the second indication information indicates that the first channel does not have a high priority, and the first indication information indicates that the positioning delay requirement is not at least one of high precision and low delay, determining to drop the SRS-Pos or the first channel on the overlapped OFDM symbol according to the third indication information.

Specifically, the determining to drop the SRS-Pos or the first channel on the overlapped OFDM symbols according to the third indication information includes: in the case that the third indication information indicates the first indication information has a high priority, performing the following operations: transmitting the SRS-Pos on the overlapped OFDM symbols, and dropping the first channel; or performing a first operation according to the resource type or the content to determine to drop the SRS-Pos or the first channel; in the case that the third indication information indicates that the second indication information has a high priority, performing the following operations: transmitting the first channel on the overlapped OFDM symbols, and dropping the SRS-Pos; or, performing the first operation according to the resource type or the content to determine to drop the SRS-Pos or the first channel.

Wherein, when a bit value of the bit occupied by the third indication information is configured as 1, it indicates that the priority of the first indication information is higher than the priority of the second indication information; when a bit value of the bit occupied by the third indication information is configured as 0, it indicates that the priority of the second indication information is higher than the priority of the first indication information.

In some embodiments of the present disclosure, the performing the first operation according to the resource type or the content to determine to drop the SRS-Pos or the first channel includes: when the resource type is an aperiodic type, transmitting the SRS-Pos on the overlapped OFDM symbols and dropping the first channel.

The performing the first operation according to the resource type or the content to determine to drop the SRS-Pos or the first channel includes: when the resource type is a periodic type or a semi-persistent type, or the resource type is not configured, transmitting the first channel on the overlapped OFDM symbols, and dropping the SRS-Pos.

In some embodiments of the present disclosure, the performing the first operation according to the resource type or the content to determine to drop the SRS-Pos or the first channel includes: determining to drop the SRS-Pos or the first channel on the overlapped OFDM symbols according to whether the first channel carries the uplink control information (UCI); or, determining to drop the SRS-Pos or the first channel on the overlapped OFDM symbols according to the reporting information content carried by the first channel.

Wherein, the determining to drop the SRS-Pos or the first channel on the overlapped OFDM symbols according to whether the first channel carries the uplink control information (UCI) includes: in the case that the first channel does not carry the UCI, transmitting the SRS-Pos on the overlapped OFDM symbols and dropping the first channel; in the case that the first channel carries the UCI, transmitting the first channel on the overlapped OFDM symbols and dropping the SRS-Pos.

Specifically, the UCI includes: at least one of a hybrid automatic repeat request acknowledgment (HARQ-ACK), a link recovery request (LRR) or a scheduling request (SR).

In some embodiments of the present disclosure, the determining to drop the SRS-Pos or the first channel on the overlapped OFDM symbols according to the reporting information content carried by the first channel includes: in the case that the first channel carries only the first reporting information, transmitting the SRS-Pos on the overlapped OFDM symbols, and dropping the first channel; wherein the first reporting information is any one of the following information: a semi-persistent CSI or periodic CSI reporting information; semi-persistent layer 1 reference signal received power (L1-RSRP) or periodic L1-RSRP reporting information; layer 1 signal to interference plus noise ratio (L1-SINR) reporting information.

Wherein, the UCI includes: at least one of HARQ-ACK, LRR or SR.

In some embodiments of the present disclosure, the SRS-Pos is an aperiodic SRS-Pos.

Some embodiments of the present disclosure also provide a signal processing method, which is applied to a network node, as shown in FIG. 2, including:
Step 21: configuring indication information, and obtaining downlink control information (DCI) according to the indication information;
Step 22: transmitting the DCI to a terminal;
Wherein, the indication information includes at least one of first indication information and second indication information;
The first indication information is used to indicate whether a positioning delay requirement is at least one of high precision and low delay;
The second indication information is used to indicate a priority of the first channel;
OFDM symbols occupied by the first channel overlap OFDM symbols occupied by an uplink positioning reference signal SRS-Pos;
The first channel includes: a physical uplink shared channel (PUSCH) and/or a physical uplink control channel (PUCCH).

The signal processing method provided by some embodiments of the present disclosure configures indication information and obtains downlink control information DCI according to the indication information; transmits the DCI to a terminal; wherein the indication information includes at least one of the first indication information and the second indication information; the first indication information is used to indicate whether the positioning delay requirement is at least one of high precision and low delay; the second indication information is used to indicate the priority of the first channel; the OFDM symbol occupied by the first channel overlaps the OFDM symbol occupied by the uplink positioning reference signal SRS-Pos; the first channel includes: the physical uplink shared channel (PUSCH) and/or Physical uplink control channel (PUCCH); it can support the terminal side to flexibly select different processing methods when the OFDM symbols occupied SRS-Pos overlap the OFDM symbols occupied by the first channel, to ensure the performance of SRS-Pos for positioning calculation, and to meet the different scenario requirements, so as to solve the problem that the signal processing solution in the related art cannot ensure the required performance and meet the needs of different scenarios.

Further, before obtaining the downlink control information (DCI) according to the indication information, the method further includes: configuring whether the indication information is in the DCI through radio resource control (RRC) signaling.

Wherein, the first indication information is represented by at least 1 bit; and/or the second indication information is represented by at least 1 bit.

Specifically, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Wherein, when the bit value of the bit occupied by the second indication information is configured as 1, it indicates that the first channel has a high priority; when the bit value of the bit occupied by the second indication information is configured as 0, it indicates that the first channel does not have a high priority.

The signal processing method provided by some embodiments of the present disclosure will be further described below with reference to both sides of the terminal and the network node.

In response to the above technical problems, some embodiments of the present disclosure provide a signal processing method, which can be specifically implemented as a collision processing method between an uplink positioning reference signal (SRS-Pos) and PUSCH and/or PUCCH (hereinafter referred to as the first channel), which mainly includes: when the OFDM symbols occupied by the SRS-Pos overlap the OFDM symbols occupied by the first channel (i.e., collision occurs or transmitted on the same OFDM symbol), determining to drop the SRS-Pos or the first channel on the overlapped OFDM symbols according to at least one of the SRS-Pos resource type, whether the first channel carries uplink control information (UCI), whether the first channel carries periodic or semi-persistent reporting information, first indication information, second indication information, and third indication information.

Wherein, the first indication information indicates whether the positioning delay requirement is at least one of high precision and low delay;

The second indication information is used to indicate the priority of the first channel;

The third indication information is used to indicate priorities of the first indication information and the second indication information.
1. Perform the drop operation according to the SRS-Pos type (that is, the resource type) or the content of the first channel:
   (1) The drop operation is performed according to the SRS-Pos type. Different SRS-Pos types have different drop processing methods:
      1) If the SRS-Pos type is an aperiodic type, the overlapped OFDM symbols between the SRS-Pos and the first channel (that is, overlapped OFDM symbols between the OFDM symbols occupied by the SRS-Pos and the OFDM symbols occupied by the first channel), transmitting the SRS-Pos, dropping the first channel;
      2) If the SRS-Pos type is a periodic type or a semi-persistent type, or the SRS-Pos type is not configured, transmitting the first channel on the overlapped OFDM symbols between the SRS-Pos and the first channel, and dropping the SRS-Pos.
   (2) The drop operation is performed according to whether the first channel carries the uplink control information (UCI):
      1) If the first channel does not carry the UCI, transmitting the SRS-Pos on the OFDM symbol where the SRS-Pos collides with the first channel (that is, the overlapped OFDM symbols), and dropping the first channel;
      2) If the first channel carries the UCI, transmitting the first channel on the OFDM symbol where the SRS-Pos collides with the first channel, and dropping the SRS-Pos.
      3) The UCI includes at least one of LRR, HARQ-ACK or SR.
   (3) The drop operation is performed according to the reporting information content of the first channel:
      1) If the first channel only carries the following report information (that is, at least one item of the following information included in the first reporting information), transmitting the SRS-Pos on the OFDM symbol where the SRS-Pos collides with the first channel, and the dropping first channel;
         a) Only semi-persistent CSI or periodic CSI reporting information;
         b) Only semi-persistent L1-RSRP or periodic L1-RSRP reporting information;
         c) Only L 1-SINR reporting information.
      2) If the first channel carries other reporting information (that is, whether or not the above reporting information is carried), transmitting the first channel on the OFDM symbol where the SRS-Pos collides with the first channel, and dropping the SRS-Pos.

That is, specifically, there are the following three cases for "performing the drop operation according to the reporting information content of the first channel":
In the first case, if the first channel only carries any one of the three reporting information a), b) and c), transmitting the SRS-Pos.

In the second case, if the first channel carries any of the three reporting information a), b), and c), and also carries other reporting information, then transmitting the first channel.

In the third case, if the first channel does not carry the three reporting information a), b) and c), but carries other reporting information, transmitting the first channel.

Among them, other reporting information refers to the reporting information except the three reporting information a), b) and c).

3) The UCI includes at least one of LRR, HARQ-ACK or SR.

2. Performing the Drop operation according to the positioning delay requirement indication information (that is, the first indication information):
(4) The first indication information indicates whether the positioning delay requirement is at least one of high precision and low delay.
(5) The Drop operation is performed according to the first indication information. Different positioning delay requirements have different drop processing methods:
   1) If the first indication information indicates that the positioning delay requirement is high precision and/or low delay, transmitting the SRS-Pos on the OFDM symbol where the SRS-Pos and the first channel overlap each other, and dropping the first channel;
   2) If the first indication information indicates that the positioning delay requirement is not high precision and/or low delay or the first indication information is not configured: transmitting the first channel on the OFDM symbol where the SRS-Pos and the first channel overlap each other, and dropping the SRS-Pos; or, performing at least one of the above operations (1) to (3) to determine to drop the SRS-Pos or the first channel.
(6) The first indication information is represented by at least 1 bit. When the first indication information is represented by 1 bit:
   1) The first indication information is configured as 1: indicating that the positioning delay requirement is high precision and/or low delay;
   2) When the first indication information is configured as 0, it indicates that the positioning delay requirement is not high precision and/or low delay;
(7) Configure whether the first indication information appears in DCI through RRC signaling, and dynamically indicating through DCI:
   1) If the RRC signaling configures that the first indication information is in the DCI, then the first indication information is dynamically indicated by the DCI to be 1 or 0.
   2) If the RRC signaling configures that the first indication information does not appear in the DCI, the first indication information is 0 by default.

3. Perform the Drop operation according to the priority information of the first channel (that is, the second indication information):
(8) The second indication information is used to indicate the priority of the first channel:
(9) The Drop operation is performed according to the second indication information. Different priority information of first channel have different drop processing methods:
   1) If the second indication information indicates that the first channel has a high priority, transmitting the first channel on the OFDM symbol where the SRS-Pos and the first channel overlap each other, and dropping the SRS-Pos;
   2) If the second indication information indicates that the first channel does not have high priority or the second indication information is not configured: transmitting the SRS-Pos on the OFDM symbol where the SRS-Pos and the first channel overlap each other, dropping the first channel; or, performing at least one of the above operations (1) to (3) to determine to drop the SRS-Pos or the first channel.
(10) The second indication information is represented by at least 1 bit. When the second indication information is represented by 1 bit:
   1) The second indication information is configured as 1: it indicates that the current first channel is the URLLC first channel with a high priority.
   2) When the second indication information is configured as 0, it means that the current first channel is not the URLLC first channel and does not have a high priority.
(11) Configuring whether the second indication information appears in DCI through the RRC signaling, and dynamically indicating through the DCI:
   1) If the RRC signaling configures that the second indication information appears in the DCI, the second indication information is dynamically indicated by the DCI to be 1 or 0.
   2) If the RRC signaling configures that the second indication information does not appear in the DCI, the second indication information is 0 by default.

4. Performing the drop operation according to the first indication information (positioning delay requirement indication information) and the second indication information (URLLC first channel priority information):
(12) Joint indication scheme 1: If the RRC signaling configures that both the first indication information and the second indication information appear in the DCI, the drop operation is performed according to the first indication information and/or the second indication information:
   1) When the second indication information is 1 or indicates that the first channel has a high priority, transmitting the first channel on the OFDM symbol where the SRS-Pos and the first channel overlap each other, and dropping the SRS-Pos.
   2) When the second indication information is 0 or indicates that the first channel does not have a high priority, the drop operation is performed according to the first indication information:
      a) If the first indication information indicates that the positioning delay requirement is high precision and/or low delay, transmitting the SRS-Pos on the OFDM symbol where the SRS-Pos and the first channel overlap each other, and dropping the first channel;
      b) If the first indication information indicates that the positioning delay requirement is not high precision and/or low delay or the first indication information is not configured: transmitting the first channel on the OFDM symbol where the SRS-Pos and the first channel overlap each other, and dropping the SRS-Pos; or, performing at least one of the above operations (1) to (3) to determine to drop the SRS-Pos or the first channel.
(13) Joint indication scheme 2: If the RRC signaling configures that both the first indication information and the second indication information appear in the DCI, the drop operation is performed according to the first indication information and/or the second indication information:
   1) When the first indication information is 1 or the positioning delay requirement is high precision and/or low delay, transmitting the SRS-Pos on the OFDM symbol where the SRS-Pos and the first channel overlap each other, and dropping the first channel.
   2) When the first indication information is 0 or the positioning delay requirement is not high precision and/or low time delay, the drop operation is performed according to the second indication information:
      a) If the second indication information indicates that the first channel has a low priority (i.e. does not have a high priority) or the second indication information is not configured: transmitting the SRS-Pos on the OFDM symbol where the SRS-Pos and the first channel overlap each other, dropping the first channel; or, performing at least one of the above operations (1) to (3) to determine to drop the SRS-Pos or the first channel;
      b) If the second indication information indicates that the first channel has a high priority, transmitting the first channel is on an OFDM symbol where the SRS-Pos and the first channel overlap each other, and dropping the SRS-Pos.

5. Perform the drop operation according to the first indication information (positioning delay requirement indication information), the second indication information (URLLC first channel priority information) and the third indication information (priority sorting information):
(14) The third indication information is used to indicate the priority of the first indication information and the second indication information:
   1) When the third indication information is 1, it indicates that the priority of the first indication information is higher, that is, the drop operation is preferentially performed according to the first indication information.
   2) When the third indication information is 0, it indicates that the priority of the second indication information is higher, that is, the drop operation is preferentially performed according to the second indication information.
(15) Joint indication scheme 3: If the RRC signaling configures that both the first indication information and the second indication information appear in the DCI, performing the drop operation according to at least one of the first indication information, the second indication information and the third indication information:
   1) When the second indication information is 1 or indicates that the first channel has a high priority, and the first indication information indicates that the positioning delay requirement is not high precision and/or low time delay, transmitting the first channel on the OFDM symbol where the SRS-Pos and the first channel overlap each other and dropping the SRS-Pos.
   2) When the second indication information is 0 or indicates that the first channel does not have a high priority, and the first indication information indicates that the positioning delay requirement is high precision and/or low time delay, transmitting the SRS-Pos on the OFDM symbol where the SRS-Pos and the first channel overlap each other and dropping the first channel.
   3) When the second indication information is 1 or indicates that the first channel has a high priority, and the first indication information indicates that the positioning delay requirement is high precision and/or low delay:
      a) When the third indication information indicates that the drop operation is preferentially performed according to the first indication information: transmitting the SRS-Pos on the OFDM symbol where the SRS-Pos and the first channel overlap each other, and dropping the first channel; or, performing at least one of the above operations (1) to (3) to determine to drop the SRS-Pos or the first channel;
      b) When the third indication information indicates that the drop operation is preferentially performed according to the second indication information: transmitting the first channel on the OFDM symbol where the SRS-Pos and the first channel overlap each other, and dropping the SRS-Pos; or, performing at least one of the above (1) to (3) to determine to drop the SRS-Pos or the first channel;
   4) When the second indication information is 0 or indicates that the first channel does not have high priority, and the first indication information indicates that the positioning delay requirement is not high precision and/or low delay:
      a) When the third indication information indicates that the drop operation is preferentially performed according to the first indication information: transmitting the SRS-Pos on the OFDM symbol where the SRS-Pos and the first channel overlap each other, and dropping the first channel; or, perform at least one of the above operations (1) to (3) to determine to drop the SRS-Pos or the first channel;
      b) When the third indication information indicates that the drop operation is preferentially performed according to the second indication information: transmitting the first channel on the OFDM symbol where the SRS-Pos and the first channel overlap each other, and dropping the SRS-Pos; or, performing at least one of the above operations (1) to (3) to determine to drop the SRS-Pos or the first channel;
(16) Specifically, the SRS-Pos in all schemes except (1) are aperiodic SRS-Pos.

The solutions provided by some embodiments of the present disclosure are exemplified below:

### Example 1 (performing the drop operation according to the type of the SRS-Pos):

This example mainly involves: when the OFDM symbols occupied by the SRS-Pos overlap the OFDM symbols occupied by the first channel, determining to drop the SRS-Pos or the first channel on the overlapped OFDM symbols according to the type of the SRS-Pos.

Specifically, the drop operation is performed according to the type of the SRS-Pos. Different SRS-Pos types have different drop processing methods:
1. If the type of the SRS-Pos is aperiodic type, transmitting the SRS-Pos on the OFDM symbol where the SRS-Pos and the first channel overlap each other, and dropping the first channel;
2. If the type of the SRS-Pos is a periodic type or a semi-persistent type, transmitting the first channel on the OFDM symbols where the SRS-Pos and the first channel overlap each other, and dropping the SRS-Pos.

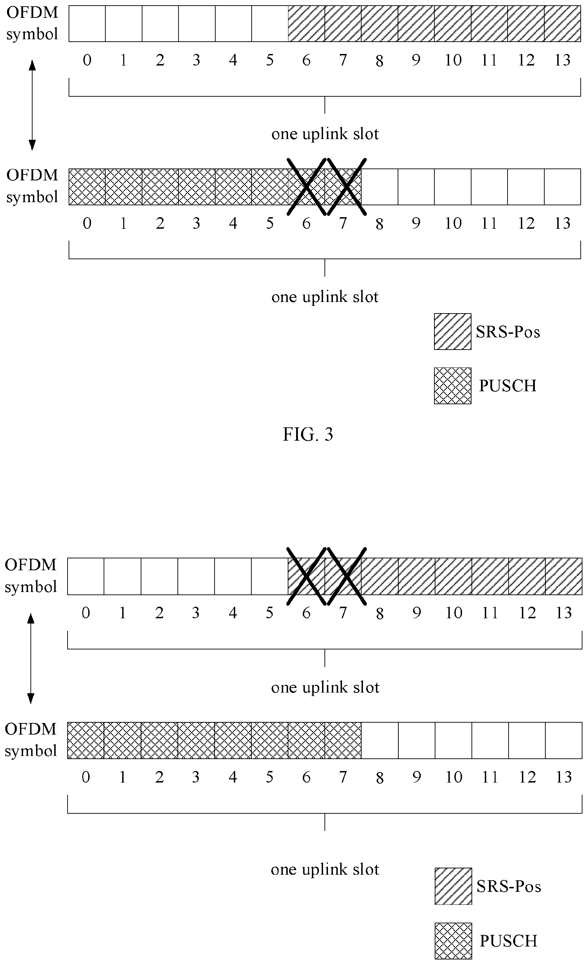

The aperiodic type of SRS-Pos is dynamically triggered by DCI, which is often applied in scenarios requiring low positioning delay, and the aperiodic SRS-Pos is only transmitted once, and when it is dropped, there is no SRS-Pos that can be used instead. So when the aperiodic SRS-Pos collides with the first channel, the SRS-Pos is transmitted and the first channel is dropped. As shown in FIG. 3 (the first channel is PUSCH as an example), one small square represents one OFDM symbol, and one uplink slot includes 14 OFDM symbols. The UE is configured with one aperiodic SRS-Pos occupying 8 symbols in one uplink slot, and is configured with a PUSCH occupying 8 slots in the uplink slot. The SRS-Pos collide with PUSCH in OFDM symbol #6 and #7, at this time, aperiodic SRS-Pos is transmitted and PUSCH is dropped.

The periodic type of SRS-Pos is periodically transmitted by the LTE according to a configured period value. If it is dropped once due to a collision, the SRS-Pos sent subsequently can also be used. The semi-persistent type of SRS-Pos is also similar. As shown in FIG. 4 (the first channel is PUSCH as an example), SRS-Pos collides with PUSCH on OFDM symbols #6 and #7, at this time, PUSCH is transmitted and the aperiodic SRS-Pos is dropped.

In this example, the collision processing scheme is to determine to drop the SRS-Pos or drop the first channel on the overlapped OFDM symbols according to the type of SRS-Pos; the scheme is simple and straightforward, does not require signaling instructions, and has no related signaling overhead.

### Example 2 (performing the drop operation according to whether the first channel carries the UCI):

This example mainly involves: when the OFDM symbols occupied by the SRS-Pos overlap the OFDM symbols occupied by the first channel, determining to drop the SRS-Pos or the first channel on the overlapped OFDM symbols according to whether the first channel carries the UCI.

Specifically, the drop operation is performed according to whether the first channel carries the UCI, includes:
1. If the first channel does not carry the UCI, transmitting the SRS-Pos on the OFDM symbol where the SRS-Pos collides with the first channel, and dropping the first channel;
2. If the first channel carries the UCI, transmitting the first channel on the OFDM symbol where the SRS-Pos collides with the first channel, and dropping the SRS-Pos.
3. The UCI includes at least one of LRR, HARQ-ACK or SR.

UCI includes LRR, HARQ-ACK and SR, which are all important uplink control information. The LTE transmits the HARQ-ACK, notifies the base station whether the last downlink data transmission was successfully received by the UE, and SR is a scheduling request, which enable the base station to initiate scheduling; LRR is Link Recovery Request to request link recovery. Therefore, if the first channel carries the above information, its priority is very high and cannot be dropped. However, if the first channel does not carry the above information, its priority is relatively low and can be dropped and the SRS-Pos is transmitted.

Among them: another case of the solution in this example is that the SRS-Pos is aperiodic SRS-Pos; that is, when the OFDM symbols occupied by the aperiodic type SRS-Pos overlap the OFDM symbols occupied by the first channel. At the time, it is determined to drop the aperiodic type SRS-Pos or the first channel on the overlapped OFDM symbols according to whether the first channel carries the UCI.

In this example, the collision processing scheme is to determine to drop the SRS-Pos or the first channel on the overlapped OFDM symbols according to whether the first channel carries the UCI; the scheme is simple and straightforward, no signaling instruction or related signaling overhead is required.

### Example 3 (performing the drop operation according to the reporting information content of the first channel):

This example mainly involves: when the OFDM symbols occupied by the SRS-Pos overlap the OFDM symbols occupied by the first channel, it is determined to drop the SRS-Pos or the first channel on the overlapped OFDM symbols according to the reporting information content of the first channel.

Specifically, the drop operation is performed according to the reporting information content of the first channel, includes:
1. If the first channel only carries the following reporting information, transmitting the SRS-Pos on the OFDM symbol where the SRS-Pos collides with the first channel and dropping the first channel;
   a) Only semi-persistent CSI or periodic CSI reporting information;
   b) Only semi-persistent L1-RSRP or periodic L1-RSRP reporting information; or,
   c) Only the L1-SINR reports information.
2. If the first channel carries other reporting information (that is, whether or not the above reporting information is carried), transmitting the first channel on the OFDM symbol where the SRS-Pos collides with the first channel, and dropping the SRS-Pos.

That is, specifically, there are the following three cases for "performing the drop operation according to the reporting information content of the first channel":

In the first case, if the first channel only carries any one of the three reporting information a), b) and c), transmitting the SRS-Pos.

In the second case, if the first channel carries any of the three reporting information a), b), and c), it also carries other reporting information, then transmitting the first channel.

In the third case, if the first channel does not carry the three reporting information a), b) and c), but other reporting information, transmitting the first channel.

Among them, other reporting information refers to the reporting information except the three reporting information a), b) and c).

3. The UCI includes at least one of LRR, HARQ-ACK and SR.

As the three types of information listed in a), b), and c), CSI and L1-RSRP are semi-persistent or periodic information, and the base station will receive, merge and smooth the information reported by a plurality of measurements, so there is no serious impact when once reporting information is missing, so the first channel carrying the above information can be dropped, and SRS-Pos is transmitted instead. In the case that the first channel carries other reporting information, the SRS-Pos is dropped, and the first channel is tranmitted.

Among them: another case of the solution in this example is that the SRS-Pos is aperiodic SRS-Pos; that is, when the OFDM symbols occupied by the aperiodic type SRS-Pos overlap the OFDM symbols occupied by the first channel. At the time, it is determined to drop the SRS-Pos of the aperiodic type or the first channel on the overlapped OFDM symbols according to the reporting information content of the first channel.

In this example, the collision processing scheme is to determine to drop SRS-Pos or the first channel on overlapped OFDM symbols according to the reporting information content of the first channel; the scheme is simple and straightforward, does not require signaling instructions, and has no related signaling overhead.

### Example 4 (performing the drop operation according to the first indication information):

This example mainly involves:
The first indication information indicates whether the positioning delay requirement is at least one of high precision and low delay.
1. Performing the drop operation according to the first indication information. Different positioning delay requirements have different drop processing methods:
   If the first indication information indicates that the positioning delay requirement is low delay and/or high precision, transmitting the SRS-Pos on the OFDM symbols where the SRS-Pos and the first channel overlap each other, and dropping the first channel;
   If the first indication information indicates that the positioning delay requirement is not low delay and/or high precision, or the first indication information is not configured: transmitting the first channel on the OFDM symbol where the SRS-Pos and the first channel overlap each other, and dropping the SRS-Pos; or, adopting at least one of the solutions in Examples 1-3 (i.e., perform at least one of the operations (1) to (3)) to determine to drop the SRS-Pos or the first channel.
2. The first indication information is represented by at least 1 bit. When the first indication information is represented by 1 bit:
   The first indication information is configured as 1: indicating that the positioning delay requirement is low delay;
   When the first indication information is configured as 0, it indicates that the positioning delay requirement is not low delay;
3. Configuring whether the first indication information appears in DCI through the RRC signaling, and dynamically indicating through the DCI:
   If the RRC signaling configures that the first indication information appears in the DCI, the first indication information is dynamically indicated through the DCI to be 1 or 0.
   If the RRC signaling configures that the first indication information does not appear in the DCI, the first indication information is 0 by default.

This example solution can be applied to high-precision and low-delay positioning scenarios. In this scenario, it is often necessary to configure SRS-Pos with enough symbols in the time domain to complete high-precision positioning. In the event of a collision between the SRS-Pos and the first channel, dropping the SRS-Pos on the overlapping symbols, as shown in FIG. 4, the positioning precision is affected and the precision requirements of high-precision positioning cannot be met. However, if the positioning calculation is performed after the SRS-Pos is sent subsequently, the delay requirement of low-delay positioning will be affected. Therefore, it is necessary to introduce the first indication information to indicate whether the positioning delay requirement is high precision and/or low delay. If it is high precision and/or low delay, the first channel is dropped and SRS-Pos is transmitted. If it is not high precision and/or low delay, the SRS-Pos is dropped and the first channel is sent.

Wherein: another case of the solution in this example is that the SRS-Pos is an aperiodic SRS-Pos.

The first indication information may indicate at least one of high precision and low delay.

In this example, the collision processing scheme is to decide to drop the SRS-Pos or drop the first channel on the overlapped OFDM symbols according to the first indication information; the scheme has good flexibility, and the collision processing schemes can be flexibly selected according to the high-precision and low-delay positioning scenarios.

### Example 5 (performing the drop operation according to the second indication information):

This example mainly involves:
The second indication information is used to indicate the priority of the first channel:
1. Performing the Drop operation according to the second indication information. Different priority information of the first channel have different drop processing methods:
   If the second indication information indicates that the first channel has a high priority, transmitting the first channel on the OFDM symbol where the SRS-Pos and the first channel overlap each other, and dropping the SRS-Pos;
   If the second indication information indicates that the first channel does not have high priority or the second indication information is not configured: transmitting the SRS-Pos on the OFDM symbol where the SRS-Pos and the first channel overlap each other, and dropping the first channel; or, adopting at least one of the solutions in Examples 1-3 (that is, performing at least one of the above operations (1) to (3)) to determine to drop the SRS-Pos or the first channel.
2. The second indication information is represented by at least 1 bit. When the second indication information is represented by 1 bit:
   The second indication information is configured as 1: indicating that the current first channel is the URLLC first channel and has a high priority.
   When the second indication information is configured as 0, it indicates that the current first channel is not the URLLC first channel and does not have a high priority.
3. Configuring whether the second indication information appears in DCI through RRC signaling, and dynamically indicating through the DCI:
   If the RRC signaling configures that the second indication information appears in the DCI, the second indication information is dynamically indicated by the DCI to be 1 or 0.
   If the RRC signaling configures that the second indication information does not appear in the DCI, the second indication information is 0 by default.

This example solution can be applied to the URLLC transmission scenario. In this scenario, the first channel is often required to have ultra-high reliability and low delay. If the SRS-Pos collides with the first channel, the first channel on the overlapped symbols is dropped, as shown in FIG. 3, the reliability of the first channel will be affected, and the reliability requirements of URLLC cannot be met. Therefore, it is necessary to introduce second indication information to indicate whether the first channel has a high priority. If the first channel has a high priority, the SRS-Pos is dropped and the first channel is transmitted; if the first channel does not have a high priority level, the first channel is dropped and SRS-Pos is transmitted.

Wherein: another case of the solution in this example is that the SRS-Pos is an aperiodic SRS-Pos.

In this example, the collision processing scheme is to determine to drop the SRS-Pos or drop the first channel on the overlapped OFDM symbols according to the second indication information; the scheme has good flexibility, and different collision processing methods can be flexibly selected according to the URLLC transmission scenario.

### Example 6 (The drop operation is performed according to the first indication information and the second indication information, and the second indication information has a higher priority):

This example mainly involves:
The drop operation is performed according to the first indication information (positioning delay requirement indication information) and the second indication information (URLLC first channel priority information).

Joint indication scheme 1: If the RRC signaling configures that both the first indication information and the second indication information appear in the DCI, the drop operation is performed according to the first indication information and/or the second indication information:
1. When the second indication information is 1 or indicates that the first channel has a high priority, transmitting the first channel on the OFDM symbol where the SRS-Pos and the first channel overlap each other, and dropping the SRS-Pos.
2. When the second indication information is 0 or indicates that the first channel does not have a high priority, performing the drop operation according to the first indication information:
   a) If the first indication information indicates that the positioning delay requirement is high precision and/or low delay, transmitting the SRS-Pos on the OFDM symbol where the SRS-Pos and the first channel overlap each other, and dropping the first channel;
   b) If the first indication information indicates that the positioning delay requirement is not high precision and/or low delay or the first indication information is not configured: transmitting the first channel on the OFDM symbol where the SRS-Pos and the first channel overlap each other, and dropping the SRS-Pos; or, adopting at least one of the solutions in Examples 1-3 (that is, perform at least one of the above operations (1) to (3)) to determine to drop the SRS-Pos or the first channel.

In the joint indication scheme, when the system is configured with the first indication information and the second indication information at the same time, the second indication information is used as the high-priority indication information, and the drop processing is preferentially performed according to the second indication information. In fact, the URLLC transmission scenario is considered with higher priority.

Wherein: another case of the solution in this example is that the SRS-Pos is an aperiodic SRS-Pos.

In this example, the collision processing scheme is that when the first indication information and the second indication information are configured at the same time, the second indication information is preferentially determined to drop the SRS-Pos or drop the first channel on the overlapped OFDM symbols; different collision processing methods can be flexibly selected according to the URLLC transmission scenario.

### Example 7 (the drop operation is performed according to the first indication information and the second indication information, the first indication information has a higher priority):

This example mainly involves:
The drop operation is performed according to the first indication information (positioning delay requirement indication information) and the second indication information (URLLC first channel priority information).

Joint indication scheme 2: If the RRC signaling configures that both the first indication information and the second indication information appear in the DCI, the drop operation is performed according to the first indication information and/or the second indication information:
1. When the first indication information is 1 or the positioning delay requirement is high precision and/or low time delay, transmitting the SRS-Pos on the OFDM symbol where the SRS-Pos and the first channel overlap each other, and dropping the first channel.
2. When the first indication information is 0 or the positioning delay requirement is not high precision and/or low time delay, the drop operation is performed according to the second indication information:
   a) If the second indication information indicates that the first channel has a low priority (i.e. does not have a high priority) or the second indication information is not configured: transmitting the SRS-Pos on the OFDM symbol where the SRS-Pos and the first channel overlap each other, dropping the first channel; or, adopting at least one of the solutions in Examples 1-3 (that is, perform at least one of the above operations (1) to (3)) to determine to drop the SRS-Pos or the first channel;
   b) If the second indication information indicates that the first channel has a high priority, transmitting the first channel on the OFDM symbol where the SRS-Pos and the first channel overlap each other, and dropping the SRS-Pos.

In the joint indication scheme, when the system is configured with the first indication information and the second indication information at the same time, the first indication information is used as the high-priority indication information, and the drop processing is preferentially performed according to the first indication information. In fact, it is to give priority to high-precision and low-delay positioning scenarios.

Wherein: another case of the solution in this example is that the SRS-Pos is an aperiodic SRS-Pos.

In this example, the collision processing scheme is to determine to drop the SRS-Pos or the first channel on the overlapped OFDM symbols according to the first indication information; the scheme has good flexibility, and the collision processing schemes can be flexibly selected according to the high-precision and low-delay positioning scenarios.

### Example 8 (performing the drop operation according to the first indication information, the second indication information and the third indication information):

This example mainly involves:
The drop operation is performed according to the first indication information (positioning delay requirement indication information), the second indication information (URLLC first channel priority information) and the third indication information (priority sorting information).
1. The third indication information is used to indicate the first indication information and the second indication information:
   When the third indication information is 1, it indicates that the priority of the first indication information is higher, that is, the drop operation is preferentially performed according to the first indication information.
   When the third indication information is 0, it indicates that the priority of the second indication information is higher, that is, the drop operation is preferentially performed according to the second indication information.
2. Joint indication scheme 3: If the RRC signaling configures that both the first indication information and the second indication information appear in the DCI, performing the drop opration according to at least one of the first indication information, the second indication information and the third indication information.
   1) When the second indication information is 1 or indicates that the first channel has a high priority, and the first indication information indicates that the positioning delay requirement is not high precision and/or low time delay, transmitting the first channel on the overlapped OFDM symbols where the SRS-Pos and the first channel overlap with each other, and dropping the SRS-Pos.
   2) When the second indication information is 0 or indicates that the first channel does not have a high priority, and the first indication information indicates that the positioning delay requirement is high precision and/or low time delay, transmitting the SRS-Pos on the overlapped OFDM symbols where the SRS-Pos and the first channel overlap with each other, and dropping the first channel.
   3) When the second indication information is 1 or indicates that the first channel has a high priority, and the first indication information indicates that the positioning delay requirement is high precision and/or low delay:
      a) When the third indication information indicates that the drop operation is preferentially performed according to the first indication information: transmitting the SRS-Pos on the OFDM symbol where the SRS-Pos and the first channel overlap each other, and dropping the first channel; or, adopting at least one of Example 1-3 (that is, performing at least one of the above operations (1) to (3)) to determine to drop the SRS-Pos or the first channel;
      b) When the third indication information indicates that the drop operation is preferentially performed according to the second indication information: transmitting the first channel on the OFDM symbol where the SRS-Pos and the first channel overlap each other, and dropping the SRS-Pos; or, adopting at least one of Example 1-3 (that is, performing at least one of the above operations (1) to (3)) to determine to drop the SRS-Pos or the first channel;
   4) When the second indication information is 0 or indicates that the first channel does not have high priority, and the first indication information indicates that the positioning delay requirement is not high precision and/or low delay:
      a) When the third indication information indicates that the drop operation is preferentially performed according to the first indication information: transmitting the SRS-Pos on the OFDM symbol where the SRS-Pos and the first channel overlap each other, and dropping the first channel; or, adopting at least one of Example 1-3 (that is, performing at least one of the above operations (1) to (3)) to determine to drop the SRS-Pos or the first channel;
      b) When the third indication information indicates that the drop operation is preferentially performed according to the second indication information: transmitting the first channel on the OFDM symbol where the SRS-Pos and the first channel overlap each other, and dropping the SRS-Pos; or, adopting at least one of Example 1-3 (that is, performing at least one of the operations (1) to (3) above) to determine to drop the SRS-Pos or the first channel.

In the joint indication scheme, when the system configures the first indication information and the second indication information at the same time, the third indication information is newly introduced to indicate whether the priority of the first indication information is higher or the priority of the second indication information higher. In this way, when the second indication information indicates that the first channel has a high priority, and the first indication information indicates that the positioning delay requirement is high precision and/or low time delay, the dropping method can be selected according to the third indication information.

Wherein: another case of the solution in this example is that the SRS-Pos is an aperiodic SRS-Pos.

In this example, the collision processing scheme is to determine to drop the SRS-Pos or drop the first channel on the overlapped OFDM symbols according to the first indication information, the second indication information and the third indication information. Different collision processing methods can be flexibly selected in the high-precision and low-delay positioning scenarios or URLLC transmission scenarios.

As can be seen from the above, the solutions provided by some embodiments of the present disclosure can be specifically implemented as a processing method when an uplink positioning reference signal collides with an OFDM symbol occupied by a first channel. Compared with the related art, the collision processing method is used. It is to determine to drop the uplink positioning reference signal or the first channel on the overlapped OFDM symbols according to at least one item of the type of the SRS-Pos, the content carried by the first channel, and the system configuration, so that different collision processing methods can be selected flexibly in low-precision and low-delay positioning scenarios or Ultra-Reliable and Low-Delay Communication (URLLC) transmission scenarios, which ensures the performance of uplink SRS-Pos signals for positioning calculation and improves positioning precision, reduces the positioning delay and meets the needs of different scenarios.

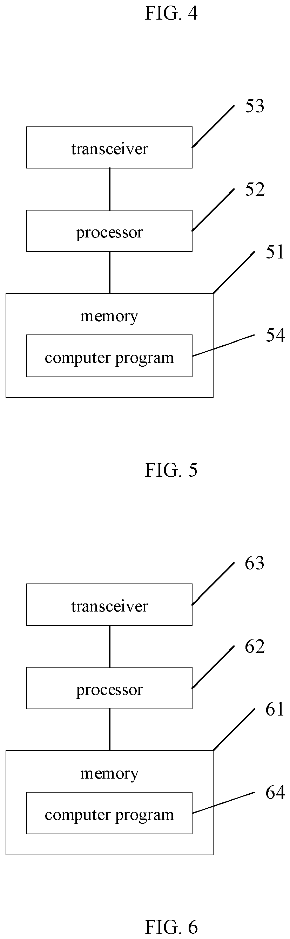

Some embodiments of the present disclosure also provide a terminal, including a memory 51, a processor 52, a transceiver 53, and a computer program 54 stored on the memory 51 and executed by the processor 52. As shown in FIG. 5, the processor 52 implements the following steps when executing the program:
In the case that OFDM symbols occupied by a Sounding Reference Signal-Position (SRS-Pos) overlap OFDM symbols occupied by a first channel, determining to drop the SRS-Pos or the first channel on overlapped OFDM symbols according to first information;
Wherein, the first channel includes: a physical uplink shared channel (PUSCH) and/or a physical uplink control channel (PUCCH);
The first information includes: at least one of a resource type of the SRS-Pos, a content carried by the first channel, or indication information configured by a network node;
The indication information is: indication information related to dropping a signal on the overlapped OFDM symbols.

According to some embodiments of the present disclosure, the terminal provided by some embodiments of the present disclosure, in the case that the OFDM symbols occupied by the uplink positioning reference signal SRS-Pos overlap the OFDM symbols occupied by the first channel, it is determined to drop the SRS-Pos or the first channel on the overlapped OFDM symbols according to the first information; it can flexibly select different processing methods when the OFDM symbols occupied by SRS-Pos overlap the OFDM symbols occupied by the first channel, to ensure the performance of the SRS-Pos used for the positioning calculation and meets the needs of different scenarios, which solves the problem that the signal processing scheme in the related art cannot guarantee the required performance and meet the needs of different scenarios.

The processor is specifically configured to: in the case that the resource type is an aperiodic type, transmit the SRS-Pos on the overlapped OFDM symbols, and drop the first channel; and/or,
The processor is specifically configured to: in the case that the resource type is a periodic type or a semi-persistent type, or the resource type is not configured, transmitting the first channel on the overlapped OFDM symbols, and dropping the SRS-Pos

The processor is specifically configured to: determine to drop the SRS-Pos or the first channel on overlapped OFDM symbols according to whether the first channel carries uplink control information (UCI); or determine to drop the SRS-Pos or the first channel on overlapped OFDM symbols according to reporting information content carried by the first channel.

In some embodiments of the present disclosure, the processor is specifically configured to: in the case that the first channel does not carry the UCI, transmit the SRS-Pos on the overlapped OFDM symbols, and drop the first channel; in the case that the first channel carries the UCI, transmit the first channel on the overlapped OFDM symbols, and drop the SRS-Pos.

Wherein, the processor is specifically configured to: in the case that the first channel only carries the first report information, transmit the SRS-Pos on the overlapped OFDM symbols, and drop the first channel; wherein, the first reporting information is any one of the following information: semi-persistent channel state indication (CSI) or periodic CSI reporting information; semi-persistent layer 1 reference signal received power (L1-RSRP) or periodic L1-RSRP reporting information; layer 1 signal to interference plus noise ratio (L1-SINR) reporting information.

In some embodiments of the present disclosure, the UCI includes: at least one of HARQ-ACK, LRR, ort SR.

Wherein, the indication information includes: first indication information; or, second indication information; or, the first indication information and the second indication information; or, the first indication information, the second indication information and third indication information; wherein the first indication information is used to indicate whether the positioning delay requirement is at least one of high precision and low delay; the second indication information is used to indicate a priority of the first channel; the third indication information is used to indicate priorities of the first indication information and the second indication information.

In some embodiments of the present disclosure, the processor is specifically configured to: in the case that the first indication information indicate that the positioning delay requirement is at least one of high precision and low delay, transmit the SRS-Pos on the overlapped OFDM symbols, and drop the first channel; in the case that the first indication information indicates that the positioning delay requirement is not at least one of the high-precision and low delay, or the first indication information is not configured, transmit the first channel on overlapped OFDM symbols, and drop the SRS-Pos; or, perform a first operation according to the resource type or the content to determine to drop the SRS-Pos or the first channel.

Wherein, the first indication information is represented by at least 1 bit.

Specifically, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Further, the processor is further configured to: receive downlink control information (DCI) from the network node; obtain or not obtain the first indication information from the DCI; in the case that the first indication information is not obtained from the DCI, it means that the first indication information indicates that the positioning delay requirement is not at least one of high precision and low delay.

Wherein, whether the first indication information appearing in the downlink control information (DCI) is configured by radio resource control (RRC).

In some embodiments of the present disclosure, the processor is specifically configured to: in the cast that the second indication information indicates that the first channel has a high priority, transmit the first channel on the overlapped OFDM symbols, and drop the SRS-Pos; in the case that the second indication information indicates that the first channel does not have a high priority, or the second indication information is not configured, transmit the SRS-Pos on the overlapped OFDM symbols, and drop the first channel; or, perform the first operation according to the resource type or the content to determine to drop the SRS-Pos or the first channel.

Wherein, the second indication information is represented by at least 1 bit.

Specifically, when a bit value of the bit occupied by the second indication information is configured as 1, it indicates that the first channel has a high priority; when the bit value of the bit occupied by the second indication information is configured as 0, it indicates that the first channel does not have a high priority.

Further, the processor is further configured to: receive downlink control information (DCI) from the network node; obtain or not obtain the second indication information from the DCI; in the case that the second indication information is not obtained from the DCI, it means that the second indication information indicates that the first channel does not have a high priority.

Specifically, whether the second indication information is in the downlink control information (DCI) is configured by radio resource control (RRC).

In some embodiments of the present disclosure, in the case that both the first indication information and the second indication information are in the downlink control information (DCI), the determining to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, determining to drop the SRS-Pos or the first channel on the overlapped OFDM symbols according to the first indication information.

Wherein, the processor is specifically configured to: in the case that the first indication information indicates that the positioning delay requirement is at least one of high precision and low delay, transmit the SRS-Pos on the overlapped OFDM symbols, and drop the first channel; in the case that the first indication information indicates that the positioning delay requirement is not at least one of high precision and low delay, or the first indication information is not configured, perform the following operations: transmitting the first channel on the overlapped OFDM symbols, and dropping the SRS-Pos; or, performing a first operation according to the resource type or the content to determine to drop the SRS-Pos or the first channel.

In some embodiments of the present disclosure, when both the first indication information and the second indication information are in the received downlink control information (DCI), the determining to drop the SRS-Pos or the first channel on the overlapped OFDM symbols according to the first information, includes: in the case that the first indication information indicates that the positioning delay requirement is at least one of high precision and low delay, transmitting the SRS-Pos on overlapped OFDM symbols and dropping the first channel; in the case that the first indication information indicates that the positioning delay requirement is not at least one of high precision and low delay, or the first indication information is not configured, determining to drop the SRS-Pos or the first channel on the overlapped OFDM symbols according to the second indication information.

The processor is specifically configured to: in the case that the second indication information indicate that the first channel has a high priority, transmit the first channel on the overlapped OFDM symbols, and drop the SRS-Pos; in the case that the second indication information indicates that the first channel does not have a high priority, or the second indication information is not configured, perform the following operations: transmitting the SRS-Pos on the overlapped OFDM symbols, and dropping the first channel; or, performing the first operation according to the resource type or the content to determine to drop the SRS-Pos or the first channel.

In some embodiments of the present disclosure, the processor is specifically configured to: in the case that the second indication information indicates that the first channel has a high priority, and the first indication information indicates that the positioning delay requirement is not at least one of high precision and low delay, transmit the first channel on the overlapped OFDM symbols, and drop the SRS- Pos; in the case that the second indication information indicates that the first channel does not have a high priority, and the first indication information indicates that the positioning delay requirement is at least one of high precision and low delay, transmit the SRS-Pos on the overlapped OFDM symbols, and drop the first channel; in the case that the second indication information indicates that the first channel has a high priority, and the first indication information indicates the positioning delay requirement has at least one of high precision and low delay, determine to drop the SRS-Pos or the first channel on the overlapped OFDM symbols according to the third indication information; in the case that the second indication information indicates that the first channel does not have a high priority, and the first indication information indicates that the positioning delay requirement is not at least one of high precision and low delay, determine to drop the SRS-Pos or the first channel on the overlapped OFDM symbol according to the third indication information.

Specifically, the processor is specifically configured to: in the case that the third indication information indicates the first indication information has a high priority, perform the following operations: transmitting the SRS-Pos on the overlapped OFDM symbols, and dropping the first channel; or performing a first operation according to the resource type or the content to determine to drop the SRS-Pos or the first channel; in the case that the third indication information indicates that the second indication information has a high priority, perform the following operations: transmitting the first channel on the overlapped OFDM symbols, and dropping the SRS-Pos; or, performing the first operation according to the resource type or the content to determine to drop the SRS-Pos or the first channel.

Wherein, when a bit value of the bit occupied by the third indication information is configured as 1, it indicates that the priority of the first indication information is higher than the priority of the second indication information; when a bit value of the bit occupied by the third indication information is configured as 0, it indicates that the priority of the second indication information is higher than the priority of the first indication information.

In some embodiments of the present disclosure, the processor is specifically configured to: when the resource type is an aperiodic type, transmit the SRS-Pos on the overlapped OFDM symbols and drop the first channel.

In some embodiments of the present disclosure, the processor is specifically configured to: when the resource type is a periodic type or a semi-persistent type, or the resource type is not configured, transmitting the first channel on the overlapped OFDM symbols, and dropping the SRS-Pos.

The processor is specifically configured to: determine to drop the SRS-Pos or the first channel on the overlapped OFDM symbols according to whether the first channel carries the uplink control information (UCI); or, determining to drop the SRS-Pos or the first channel on the overlapped OFDM symbols according to the reporting information content carried by the first channel.

The processor is specifically configured to: in the case that the first channel does not carry the UCI, transmit the SRS-Pos on the overlapped OFDM symbols and dropping the first channel; in the case that the first channel carries the UCI, transmit the first channel on the overlapped OFDM symbols and drop the SRS-Pos.

In some embodiments of the present disclosure, the UCI includes: at least one of a hybrid automatic repeat request acknowledgment (HARQ-ACK), a link recovery request (LRR) or a scheduling request (SR).

Wherein, the processor is specifically configured to: in the case that the first channel carries only the first reporting information, transmit the SRS-Pos on the overlapped OFDM symbols, and drop the first channel; wherein the first reporting information is any one of the following information: a semi-persistent CSI or periodic CSI reporting information; semi-persistent layer 1 reference signal received power (L1-RSRP) or periodic L1-RSRP reporting information; layer 1 signal to interference plus noise ratio (L1-SINR) reporting information.

In some embodiments of the present disclosure, the UCI includes: at least one of HARQ-ACK, LRR or SR.

Wherein, the SRS-Pos is an aperiodic SRS-Pos.

Wherein, the above-mentioned implementation embodiments of the signal processing method at the terminal side are all applicable to the embodiments of the terminal, and the same technical effect can also be achieved.

Some embodiments of the present disclosure also provide a network node, including a memory 61, a processor 62, a transceiver 63, and a computer program 64 stored on the memory 61 and executed by the processor 62; 6, the processor 62 implements the following steps when executing the program:
configuring indication information, and obtaining downlink control information (DCI) according to the indication information;
transmitting the DCI to a terminal;
Wherein, the indication information includes at least one of first indication information and second indication information;
The first indication information is used to indicate whether a positioning delay requirement is at least one of high precision and low delay;
The second indication information is used to indicate a priority of the first channel;
OFDM symbols occupied by the first channel overlap OFDM symbols occupied by an uplink positioning reference signal SRS-Pos;
The first channel includes: a physical uplink shared channel (PUSCH) and/or a physical uplink control channel (PUCCH).

According to some embodiments of the present disclosure, the network node configures indication information and obtains downlink control information DCI according to the indication information; transmits the DCI to a terminal; wherein the indication information includes at least one of the first indication information and the second indication information; the first indication information is used to indicate whether the positioning delay requirement is at least one of high precision and low delay; the second indication information is used to indicate the priority of the first channel; the OFDM symbol occupied by the first channel overlaps the OFDM symbol occupied by the uplink positioning reference signal SRS-Pos; the first channel includes: the physical uplink shared channel (PUSCH) and/or Physical uplink control channel (PUCCH); it can support the terminal side to flexibly select different processing methods when the OFDM symbols occupied SRS-Pos overlap the OFDM symbols occupied by the first channel, to ensure the performance of SRS-Pos for positioning calculation, and to meet the different scenario requirements, so as to solve the problem that the signal processing solution in the related art cannot ensure the required performance and meet the needs of different scenarios.

The processor is further configured to configure whether the indication information is in the DCI through radio resource control (RRC) signaling before obtaining the downlink control information DCI according to the indication information.

Wherein, the first indication information is represented by at least 1 bit; and/or the second indication information is represented by at least 1 bit.

Specifically, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Wherein, when the bit value of the bit occupied by the second indication information is configured as 1, it indicates that the first channel has a high priority; when the bit value of the bit occupied by the second indication information is configured as 0, it indicates that the first channel does not have a high priority.

Wherein, the above-mentioned implementation embodiments of the signal processing method on the network node side are all applicable to the embodiments of the network node, and the same technical effect can also be achieved.

Some embodiments of the present disclosure also provide a computer-readable storage medium on which a computer program is stored, and when the program is executed by a processor, implements the steps of the signal processing method on the terminal side or the network node side.

Wherein, the above-mentioned implementation embodiments of the signal processing method on the terminal side and the network node side are all applicable to the embodiments of the computer-readable storage medium, and can also achieve the same technical effect.

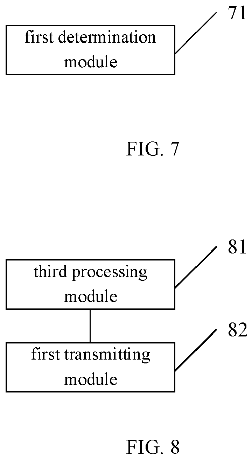

Some embodiments of the present disclosure further provide a signal processing device, which is applied to a terminal. As shown in FIG. 7, the device includes:
A first determination module 71 is configured to, in the case that OFDM symbols occupied by a Sounding Reference Signal-Position (SRS-Pos) overlap OFDM symbols occupied by a first channel, determine to drop the SRS-Pos or the first channel on overlapped OFDM symbols according to first information;
Wherein, the first channel includes: a physical uplink shared channel PUSCH and/or a physical uplink control channel PUCCH;
The first information includes: at least one of a resource type of the SRS-Pos, a content carried by the first channel, or indication information configured by a network node;
The indication information is: indication information related to dropping a signal on the overlapped OFDM symbols.

In the signal processing device provided by some embodiments of the present disclosure, in the case that the OFDM symbols occupied by the uplink positioning reference signal SRS-Pos overlap the OFDM symbols occupied by the first channel, it is determined to drop the SRS-Pos or the first channel on the overlapped OFDM symbols according to the first information; it can flexibly select different processing methods when the OFDM symbols occupied by SRS-Pos overlap the OFDM symbols occupied by the first channel, to ensure the performance of the SRS-Pos used for the positioning calculation and meets the needs of different scenarios, which solves the problem that the signal processing scheme in the related art cannot guarantee the required performance and meet the needs of different scenarios.

Wherein, the first determination module includes: a first processing sub-module, configured to, in the case that the resource type is an aperiodic type, transmit the SRS-Pos on the overlapped OFDM symbols, and dropping the first channel; and/or,
a second processing sub-module, configured to, in the case that the resource type is a periodic type or a semi-persistent type, or the resource type is not configured, transmitting the first channel on the overlapped OFDM symbols, and dropping the SRS-Pos.

Wherein, the first determination module includes: a third processing sub-module, configured to determine to drop the SRS-Pos or the first channel on overlapped OFDM symbols according to whether the first channel carries uplink control information (UCI); or determine to drop the SRS-Pos or the first channel on overlapped OFDM symbols according to reporting information content carried by the first channel.

Specifically, the determining to drop the SRS-Pos or the first channel on overlapped OFDM symbols according to whether the first channel carries uplink control information (UCI) includes: in the case that the first channel does not carry the UCI, transmitting the SRS-Pos on the overlapped OFDM symbols, and dropping the first channel; in the case that the first channel carries the UCI, transmitting the first channel on the overlapped OFDM symbols, and dropping the SRS-Pos.

Specifically, the determining to drop the SRS-Pos or the first channel on overlapped OFDM symbols according to reporting information content carried by the first channel includes: in the case that the first channel only carries the first report information, transmitting the SRS-Pos on the overlapped OFDM symbols, and dropping the first channel; wherein, the first reporting information is any one of the following information: semi-persistent channel state indication (CSI) or periodic CSI reporting information; semi-persistent layer 1 reference signal received power (L 1-RSRP) or periodic L1-RSRP reporting information; layer 1 signal to interference plus noise ratio (L1-SINR) reporting information.

In some embodiments of the present disclosure, the UCI includes: at least one of a hybrid automatic repeat request acknowledgement (HARQ-ACK), a link recovery request (LRR), or a scheduling request (SR).

Wherein, the indication information includes: first indication information; or, second indication information; or, the first indication information and the second indication information; or, the first indication information, the second indication information and third indication information; wherein the first indication information is used to indicate whether the positioning delay requirement is at least one of high precision and low delay; the second indication information is used to indicate a priority of the first channel; the third indication information is used to indicate priorities of the first indication information and the second indication information.

In some embodiments of the present disclosure, the first determination module includes: a fourth processing sub-module, configured to, in the case that the first indication information indicate that the positioning delay requirement is at least one of high precision and low delay, transmit the SRS-Pos on the overlapped OFDM symbols, and dropping the first channel; in the case that the first indication information indicates that the positioning delay requirement is not at least one of the high-precision and low delay, or the first indication information is not configured, transmit the first channel on overlapped OFDM symbols, and drop the SRS-Pos; or, perform a first operation according to the resource type or the content to determine to drop the SRS-Pos or the first channel.

Wherein, the first indication information is represented by at least 1 bit.

Specifically, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Further, the signal processing device further includes: a first receiving module, configured to receive downlink control information (DCI) from the network node before determining to drop the SRS-Pos or the first channel on the overlapped OFDM symbols according to the first information; and a first processing module, configured to obtain or not obtain the first indication information from the DCI; in the case that the first indication information is not obtained from the DCI, indicate that the first indication information indicates that the positioning delay requirement is not at least one of high precision and low delay.

Specifically, whether the first indication information appearing in the downlink control information (DCI) is configured by radio resource control (RRC).

In some embodiments of the present disclosure, the first determination module includes: a fifth processing sub-module, configured to, in the cast that the second indication information indicates that the first channel has a high priority, transmit the first channel on the overlapped OFDM symbols, and drop the SRS-Pos; in the case that the second indication information indicates that the first channel does not have a high priority, or the second indication information is not configured, transmit the SRS-Pos on the overlapped OFDM symbols, and drop the first channel; or, perform the first operation according to the resource type or the content to determine to drop the SRS-Pos or the first channel.

Wherein, the second indication information is represented by at least 1 bit.

Specifically, when a bit value of the bit occupied by the second indication information is configured as 1, it indicates that the first channel has a high priority; when the bit value of the bit occupied by the second indication information is configured as 0, it indicates that the first channel does not have a high priority.

Further, the signal processing device further includes: a second receiving module, configured to receive downlink control information (DCI) from the network node before determining to drop the SRS-Pos or the first channel on the overlapped OFDM symbols according to the first information; a second processing module, configured to obtain or not obtain the second indication information from the DCI; in the case that the second indication information is not obtained from the DCI, indicate that the second indication information indicates that the first channel does not have a high priority.

Specifically, whether the second indication information is in the downlink control information (DCI) is configured by radio resource control (RRC).

In some embodiments of the present disclosure, in the case that both the first indication information and the second indication information are in the downlink control information (DCI), the determining to drop the SRS-Pos or the first channel on the overlapped OFDM symbols according to the first information includes: in the cast that the second indication information indicates that the first channel has a high priority, transmitting the first channel on the overlapped OFDM symbols, and dropping the SRS-Pos; in the case that the second indication information indicates that the first channel does not have a high priority, or the second indication information is not configured, determining to drop the SRS-Pos or the first channel on the overlapped OFDM symbols according to the first indication information.

Specifically, the determining to drop the SRS-Pos or the first channel on the overlapped OFDM symbols according to the first indication information includes: in the case that the first indication information indicates that the positioning delay requirement is at least one of high precision and low delay, transmitting the SRS-Pos on the overlapped OFDM symbols, and dropping the first channel; in the case that the first indication information indicates that the positioning delay requirement is not at least one of high precision and low delay, or the first indication information is not configured, performing the following operations: transmitting the first channel on the overlapped OFDM symbols, and dropping the SRS-Pos; or, performing a first operation according to the resource type or the content to determine to drop the SRS-Pos or the first channel.

In some embodiments of the present disclosure, when both the first indication information and the second indication information are in the received downlink control information (DCI), the determining to drop the SRS-Pos or the first channel on the overlapped OFDM symbols according to the first information, includes: in the case that the first indication information indicates that the positioning delay requirement is at least one of high precision and low delay, transmitting the SRS-Pos on overlapped OFDM symbols and dropping the first channel; in the case that the first indication information indicates that the positioning delay requirement is not at least one of high precision and low delay, or the first indication information is not configured, determining to drop the SRS-Pos or the first channel on the overlapped OFDM symbols according to the second indication information.

Specifically, the determining to drop the SRS-Pos or the first channel on the overlapped OFDM symbols according to the second indication information includes: in the case that the second indication information indicate that the first channel has a high priority, transmitting the first channel on the overlapped OFDM symbols, and dropping the SRS-Pos; in the case that the second indication information indicates that the first channel does not have a high priority, or the second indication information is not configured, performing the following operations: transmitting the SRS-Pos on the overlapped OFDM symbols, and dropping the first channel; or, performing the first operation according to the resource type or the content to determine to drop the SRS-Pos or the first channel.

In some embodiments of the present disclosure, the first determination module includes: an eighth processing submodule, configured to, in the case that the second indication information indicates that the first channel has a high priority, and the first indication information indicates that the positioning delay requirement is not at least one of high precision and low delay, transmit the first channel on the overlapped OFDM symbols, and drop the SRS- Pos; in the case that the second indication information indicates that the first channel does not have a high priority, and the first indication information indicates that the positioning delay requirement is at least one of high precision and low delay, transmit the SRS-Pos on the overlapped OFDM symbols, and drop the first channel; in the case that the second indication information indicates that the first channel has a high priority, and the first indication information indicates the positioning delay requirement has at least one of high precision and low delay, determine to drop the SRS-Pos or the first channel on the overlapped OFDM symbols according to the third indication information; in the case that the second indication information indicates that the first channel does not have a high priority, and the first indication information indicates that the positioning delay requirement is not at least one of high precision and low delay, determine to drop the SRS-Pos or the first channel on the overlapped OFDM symbol according to the third indication information.

Specifically, the determining to drop the SRS-Pos or the first channel on the overlapped OFDM symbols according to the third indication information includes: in the case that the third indication information indicates the first indication information has a high priority, performing the following operations: transmitting the SRS-Pos on the overlapped OFDM symbols, and dropping the first channel; or performing a first operation according to the resource type or the content to determine to drop the SRS-Pos or the first channel; in the case that the third indication information indicates that the second indication information has a high priority, performing the following operations: transmitting the first channel on the overlapped OFDM symbols, and dropping the SRS-Pos; or, performing the first operation according to the resource type or the content to determine to drop the SRS-Pos or the first channel.

Wherein, when a bit value of the bit occupied by the third indication information is configured as 1, it indicates that the priority of the first indication information is higher than the priority of the second indication information; when a bit value of the bit occupied by the third indication information is configured as 0, it indicates that the priority of the second indication information is higher than the priority of the first indication information.

In some embodiments of the present disclosure, the performing the first operation according to the resource type or the content to determine to drop the SRS-Pos or the first channel includes: when the resource type is an aperiodic type, transmitting the SRS-Pos on the overlapped OFDM symbols and dropping the first channel.

The performing the first operation according to the resource type or the content to determine to drop the SRS-Pos or the first channel includes: when the resource type is a periodic type or a semi-persistent type, or the resource type is not configured, transmitting the first channel on the overlapped OFDM symbols, and dropping the SRS-Pos.

In some embodiments of the present disclosure, the performing the first operation according to the resource type or the content to determine to drop the SRS-Pos or the first channel includes: determining to drop the SRS-Pos or the first channel on the overlapped OFDM symbols according to whether the first channel carries the uplink control information (UCI); or, determining to drop the SRS-Pos or the first channel on the overlapped OFDM symbols according to the reporting information content carried by the first channel.

Wherein, the determining to drop the SRS-Pos or the first channel on the overlapped OFDM symbols according to whether the first channel carries the uplink control information (UCI) includes: in the case that the first channel does not carry the UCI, transmitting the SRS-Pos on the overlapped OFDM symbols and dropping the first channel; in the case that the first channel carries the UCI, transmitting the first channel on the overlapped OFDM symbols and dropping the SRS-Pos.

Specifically, the UCI includes: at least one of a hybrid automatic repeat request acknowledgment (HARQ-ACK), a link recovery request (LRR) or a scheduling request (SR).

In some embodiments of the present disclosure, the determining to drop the SRS-Pos or the first channel on the overlapped OFDM symbols according to the reporting information content carried by the first channel includes: in the case that the first channel carries only the first reporting information, transmitting the SRS-Pos on the overlapped OFDM symbols, and dropping the first channel; wherein the first reporting information is any one of the following information: a semi-persistent CSI or periodic CSI reporting information; semi-persistent layer 1 reference signal received power (L1-RSRP) or periodic L1-RSRP reporting information; layer 1 signal to interference plus noise ratio (L1-SINR) reporting information.

Wherein, the UCI includes: at least one of HARQ-ACK, LRR or SR.

In some embodiments of the present disclosure, the SRS-Pos is an aperiodic SRS-Pos.

The implementation embodiments of the signal processing method on the terminal side are all applicable to the embodiments of the signal processing device, and the same technical effect can also be achieved.

Some embodiments of the present disclosure further provide a signal processing device, which is applied to a network node, as shown in FIG. 8, including:
a third processing module 81, configured to configure indication information, and obtain downlink control information (DCI) according to the indication information;
a first sending module 82, configured to transmit the DCI to a terminal;
Wherein, the indication information includes at least one of first indication information and second indication information;
The first indication information is used to indicate whether a positioning delay requirement is at least one of high precision and low delay;
The second indication information is used to indicate a priority of the first channel;
OFDM symbols occupied by the first channel overlap OFDM symbols occupied by an uplink positioning reference signal SRS-Pos;
The first channel includes: a physical uplink shared channel (PUSCH) and/or a physical uplink control channel (PUCCH).

The signal processing device provided by some embodiments of the present disclosure configures indication information and obtains downlink control information DCI according to the indication information; transmits the DCI to a terminal; wherein the indication information includes at least one of the first indication information and the second indication information; the first indication information is used to indicate whether the positioning delay requirement is at least one of high precision and low delay; the second indication information is used to indicate the priority of the first channel; the OFDM symbol occupied by the first channel overlaps the OFDM symbol occupied by the uplink positioning reference signal SRS-Pos; the first channel includes: the physical uplink shared channel (PUSCH) and/or Physical uplink control channel (PUCCH); it can support the terminal side to flexibly select different processing methods when the OFDM symbols occupied SRS-Pos overlap the OFDM symbols occupied by the first channel, to ensure the performance of SRS-Pos for positioning calculation, and to meet the different scenario requirements, so as to solve the problem that the signal processing solution in the related art cannot ensure the required performance and meet the needs of different scenarios.

Further, the signal processing device further includes: a first configuration module, configured to configure whether the indication information is in the DCI through radio resource control (RRC) signaling.

Wherein, the first indication information is represented by at least 1 bit; and/or the second indication information is represented by at least 1 bit.

Specifically, in the case that a bit value of the bit occupied by the first indication information is configured as 1, it indicates that the positioning delay requirement is at least one of high precision and low delay; in the case that the bit value of the bit is configured as 0, it indicates that the positioning delay requirement is not at least one of high precision and low delay.

Wherein, when the bit value of the bit occupied by the second indication information is configured as 1, it indicates that the first channel has a high priority; when the bit value of the bit occupied by the second indication information is configured as 0, it indicates that the first channel does not have a high priority.

Wherein, the above-mentioned implementation embodiments of the signal processing method on the network node side are all applicable to the embodiments of the signal processing device, and the same technical effect can also be achieved.

It should be noted that many functional components described in this specification are referred to as modules/sub-modules in order to more particularly emphasize the independence of their implementations.

In some embodiments of the present disclosure, modules/sub-modules may be implemented in software for execution by various types of processors. For example, an identified executable code module may comprise one or more physical or logical blocks of computer instructions, for example, which may be structured as objects, procedures, or functions. Nonetheless, the executable code of the identified module need not be physically located together, but may include different instructions stored in different bits that, when logically combined, constitute the module and implement the purpose of the module.

Each module, unit, sub-unit or sub-module may be one or more integrated circuits configured to implement the above method, for example: one or more application specific integrated circuits (ASIC), or, one or more microprocessor (digital signal processor, DSP), or, one or more field programmable gate arrays (FPGA), etc. For another example, when one of the above modules is implemented in the form of a processing element scheduler code, the processing element may be a general-purpose processor, such as a central processing unit (CPU) or other processors that can invoke program codes. For another example, these modules can be integrated together and implemented in the form of a system-on-a-chip (SOC).

In practice, an executable code module may be a single instruction or many instructions, and may even be distributed over multiple different code segments, among different programs, and across multiple memory devices. Likewise, operational data may be identified within modules, and may be implemented in any suitable form and organized within any suitable type of data structure. The operational data may be collected as a single data set, or may be distributed over different locations (including over different storage devices), and may exist on a system or network as electronic signals.

When a module can be implemented by software, considering the level of existing hardware technology, a module that can be implemented by software, regardless of cost, can build corresponding hardware circuits to implement corresponding functions. The hardware circuits include conventional very large scale integration (VLSI) circuits or gate arrays as well as off-the-shelf semiconductors such as logic chips, transistors, or other discrete components. A module may also be implemented in programmable hardware devices, such as field programmable gate arrays, programmable array logic, programmable logic devices, and the like.

The above are optional embodiments of the present disclosure. It should be pointed out that for those skilled in the art, several improvements and modifications can be made without departing from the principles of the present disclosure, and these improvements and modifications should also be regarded as the protection scope of the present disclosure.

## Claims

1. A signal processing method, applied to a terminal, comprising:
determining to drop Sounding Reference Signal-Position (SRS-Pos) or a first channel on overlapped Orthogonal Frequency Division Multiplexing (OFDM) symbols according to first information in the case that Orthogonal Frequency Division Multiplexing (OFDM) symbols occupied by an uplink positioning reference signal Sounding Reference Signal-Position (SRS-Pos) overlap OFDM symbols occupied by the first channel;
wherein, the first channel includes: a physical uplink shared channel (PUSCH) and/or a physical uplink control channel (PUCCH);
the first information includes: at least one of a resource type of the SRS-Pos, a content carried by the first channel, or indication information configured by a network node;
the indication information is related to dropping a signal on the overlapped OFDM symbols.

2. The signal processing method according to claim 1, wherein the determining to drop the SRS-Pos or the first channel on overlapped OFDM symbols according to first information includes:
transmitting the SRS-Pos on the overlapped OFDM symbols, and dropping the first channel in the case that the resource type is an aperiodic type; and/or,
transmitting the first channel on the overlapped OFDM symbols, and dropping the SRS-Pos in the case that the resource type is a periodic type or a semi-persistent type, or the resource type is not configured.

3. The signal processing method according to claim 1, wherein determining to drop the SRS-Pos or the first channel on overlapped OFDM symbols according to first information includes:
determining to drop the SRS-Pos or the first channel on overlapped OFDM symbols according to whether the first channel carries uplink control information (UCI); or
determining to drop the SRS-Pos or the first channel on overlapped OFDM symbols according to reporting information content carried by the first channel.

4. The signal processing method according to claim 3, wherein the determining to drop the SRS-Pos or the first channel on overlapped OFDM symbols according to whether the first channel carries uplink control information (UCI) includes:
transmitting the SRS-Pos on the overlapped OFDM symbols, and dropping the first channel in the case that the first channel does not carry the UCI;
transmitting the first channel on the overlapped OFDM symbols, and dropping the SRS-Pos in the case that the first channel carries the UCI.

5. The signal processing method according to claim 3, wherein the determining to drop the SRS-Pos or the first channel on overlapped OFDM symbols according to reporting information content carried by the first channel includes:
transmitting the SRS-Pos on the overlapped OFDM symbols, and dropping the first channel in the case that the first channel only carries first report information;
wherein, the first reporting information is any one of the following information:
semi-persistent channel state indication (CSI) or periodic CSI reporting information;
semi-persistent layer 1 reference signal received power (L1-RSRP) or periodic L1-RSRP reporting information;
layer 1 signal to interference plus noise ratio (L1-SINR) reporting information.

6. The signal processing method according to claim 4 or 5, wherein the UCI includes: at least one of a hybrid automatic repeat request acknowledgement (HARQ-ACK), a link recovery request (LRR), or a scheduling request (SR).

7. The signal processing method according to claim 1, wherein the indication information comprises:
first indication information; or,
second indication information; or,
the first indication information and the second indication information; or,
the first indication information, the second indication information and third indication information;
wherein the first indication information is used to indicate whether a positioning delay requirement is at least one of high precision and low delay;
the second indication information is used to indicate a priority of the first channel;
the third indication information is used to indicate priorities of the first indication information and the second indication information.

8. The signal processing method according to claim 7, wherein the determining to drop the SRS-Pos or the first channel on the overlapped OFDM symbols according to the first information includes:
transmitting the SRS-Pos on the overlapped OFDM symbols, and dropping the first channel in the case that the first indication information indicate that the positioning delay requirement is at least one of high precision and low delay;
in the case that the first indication information indicates that the positioning delay requirement is not at least one of the high-precision and low delay, or the first indication information is not configured, performing the following operation:
transmitting the first channel on the overlapped OFDM symbols, and dropping the SRS-Pos; or,
performing a first operation according to the resource type or the content to determine to drop the SRS-Pos or the first channel,
wherein, the first indication information is represented by at least 1 bit.

9. The signal processing method according to claim 8, wherein, in the case that a bit value of the bit occupied by the first indication information is configured as 1, it indicates that the positioning delay requirement is at least one of high precision and low delay;
in the case that the bit value of the bit occupied by the first indication information is configured as 0, it indicates that the positioning delay requirement is not at least one of high precision and low delay.

10. The signal processing method according to claim 8, wherein before determining to drop the SRS-Pos or the first channel on the overlapped OFDM symbols according to the first information, the method further includes:
receiving downlink control information (DCI) from the network node;
obtaining or not obtaining the first indication information from the DCI;
indicating that the first indication information indicates that the positioning delay requirement is not at least one of high precision and low delay in the case that the first indication information is not obtained from the DCI.

11. The signal processing method according to claim 10, wherein whether the first indication information appears in the DCI is configured by radio resource control (RRC).

12. The signal processing method according to claim 7, wherein the determining, to drop the SRS-Pos or the first channel on the overlapped OFDM symbols according to the first information includes:
in the cast that the second indication information indicates that the first channel has a high priority, transmitting the first channel on the overlapped OFDM symbols, and dropping the SRS-Pos;
in the case that the second indication information indicates that the first channel does not have a high priority, or the second indication information is not configured, performing the following operations:
transmitting the SRS-Pos on the overlapped OFDM symbols, and dropping the first channel; or,
performing the first operation according to the resource type or the content to determine to drop the SRS-Pos or the first channel,
wherein, the second indication information is represented by at least 1 bit.

13. The signal processing method according to claim 12, wherein when a bit value of the bit occupied by the second indication information is configured as 1, it indicates that the first channel has a high priority;
when the bit value of the bit occupied by the second indication information is configured as 0, it indicates that the first channel does not have a high priority.

14. The signal processing method according to claim 12, wherein before determining to drop the SRS-Pos or the first channel on the overlapped OFDM symbols according to the first information, the method further includes:
receiving DCI from the network node;
obtaining or not obtaining the second indication information from the DCI;
indicating that the second indication information indicates that the first channel does not have a high priority in the case that the second indication information is not obtained from the DCI.

15. The signal processing method according to claim 14, wherein whether the second indication information appears in the DCI is configured by RRC.

16. The signal processing method according to claim 7, wherein, in the case that both the first indication information and the second indication information appear in the DCI, the determining to drop the SRS-Pos or the first channel on the overlapped OFDM symbols according to the first information includes:
transmitting the first channel on the overlapped OFDM symbols, and dropping the SRS-Pos in the cast that the second indication information indicates that the first channel has a high priority;
determining to drop the SRS-Pos or the first channel on the overlapped OFDM symbols according to the first indication information in the case that the second indication information indicates that the first channel does not have a high priority, or the second indication information is not configured.

17. The signal processing method according to claim 16, wherein the determining to drop the SRS-Pos or the first channel on the overlapped OFDM symbols according to the first indication information includes:
transmitting the SRS-Pos on the overlapped OFDM symbols, and dropping the first channel in the case that the first indication information indicates that the positioning delay requirement is at least one of high precision and low delay;
in the case that the first indication information indicates that the positioning delay requirement is not at least one of high precision and low delay, or the first indication information is not configured, performing the following operations:
transmitting the first channel on the overlapped OFDM symbols, and dropping the SRS-Pos; or,
performing a first operation according to the resource type or the content to determine to drop the SRS-Pos or the first channel.

18. The signal processing method according to claim 7, wherein, when both the first indication information and the second indication information appear in the received DCI, the determining to drop the SRS-Pos or the first channel on the overlapped OFDM symbols according to the first information, includes:
transmitting the SRS-Pos on overlapped OFDM symbols and dropping the first channel in the case that the first indication information indicates that the positioning delay requirement is at least one of high precision and low delay;
determining to drop the SRS-Pos or the first channel on the overlapped OFDM symbols according to the second indication information in the case that the first indication information indicates that the positioning delay requirement is not at least one of high precision and low delay, or the first indication information is not configured.

19. The signal processing method according to claim 18, wherein the determining to drop the SRS-Pos or the first channel on the overlapped OFDM symbols according to the second indication information includes:
transmitting the first channel on the overlapped OFDM symbols, and dropping the SRS-Pos in the case that the second indication information indicate that the first channel has a high priority;
in the case that the second indication information indicates that the first channel does not have a high priority, or the second indication information is not configured, performing the following operations:
transmitting the SRS-Pos on the overlapped OFDM symbols, and dropping the first channel; or,
performing the first operation according to the resource type or the content to determine to drop the SRS-Pos or the first channel.

20. The signal processing method according to claim 7, wherein the determining to drop the SRS-Pos or the first channel on the overlapped OFDM symbols according to the first information includes:
transmitting the first channel on the overlapped OFDM symbols, and dropping the SRS-Pos in the case that the second indication information indicates that the first channel has a high priority, and the first indication information indicates that the positioning delay requirement is not at least one of high precision and low delay;
transmitting the SRS-Pos on the overlapped OFDM symbols, and dropping the first channel in the case that the second indication information indicates that the first channel does not have a high priority, and the first indication information indicates that the positioning delay requirement is at least one of high precision and low delay;
determining to drop the SRS-Pos or the first channel on the overlapped OFDM symbols according to the third indication information in the case that the second indication information indicates that the first channel has a high priority, and the first indication information indicates the positioning delay requirement is at least one of high precision and low delay;
determining to drop the SRS-Pos or the first channel on the overlapped OFDM symbol according to the third indication information in the case that the second indication information indicates that the first channel does not have a high priority, and the first indication information indicates that the positioning delay requirement is not at least one of high precision and low delay.

21. The signal processing method according to claim 20, wherein the determining to drop the SRS-Pos or the first channel on the overlapped OFDM symbols according to the third indication information includes:
in the case that the third indication information indicates the first indication information has a high priority, performing the following operations:
transmitting the SRS-Pos on the overlapped OFDM symbols, and dropping the first channel; or
performing a first operation according to the resource type or the content to determine to drop the SRS-Pos or the first channel;
in the case that the third indication information indicates that the second indication information has a high priority, performing the following operations:
transmitting the first channel on the overlapped OFDM symbols, and dropping the SRS-Pos; or,
performing the first operation according to the resource type or the content to determine to drop the SRS-Pos or the first channel.

22. The signal processing method according to claim 20, wherein, when a bit value of the bit occupied by the third indication information is configured as 1, it indicates that a priority of the first indication information is higher than a priority of the second indication information;
when the bit value of the bit occupied by the third indication information is configured as 0, it indicates that the priority of the second indication information is higher than the priority of the first indication information.

23. The signal processing method according to claim 8, 12, 17, 19 or 21, wherein the performing the first operation according to the resource type or the content to determine to drop the SRS-Pos or the first channel includes:
when the resource type is an aperiodic type, transmitting the SRS-Pos on the overlapped OFDM symbols and dropping the first channel.

24. The signal processing method according to claim 8, 12, 17, 19 or 21, wherein the performing the first operation according to the resource type or the content to determine to drop the SRS-Pos or the first channel includes:
when the resource type is a periodic type or a semi-persistent type, or the resource type is not configured, transmitting the first channel on the overlapped OFDM symbols, and dropping the SRS-Pos.

25. The signal processing method according to claim 8, 12, 17, 19 or 21, wherein the performing the first operation according to the resource type or the content to determine to drop the SRS-Pos or the first channel includes:
determining to drop the SRS-Pos or the first channel on the overlapped OFDM symbols according to whether the first channel carries the UCI; or,
determining to drop the SRS-Pos or the first channel on the overlapped OFDM symbols according to reporting information content carried by the first channel.

26. The signal processing method according to claim 25, wherein the determining to drop the SRS-Pos or the first channel on the overlapped OFDM symbols according to whether the first channel carries the UCI includes:
transmitting the SRS-Pos on the overlapped OFDM symbols and dropping the first channel in the case that the first channel does not carry the UCI;
transmitting the first channel on the overlapped OFDM symbols and dropping the SRS-Pos in the case that the first channel carries the UCI.

27. The signal processing method according to claim 26, wherein the UCI includes: at least one of a hybrid automatic repeat request acknowledgment (HARQ-ACK), a link recovery request (LRR) or a scheduling request (SR).

28. The signal processing method according to claim 25, wherein the determining to drop the SRS-Pos or the first channel on the overlapped OFDM symbols according to reporting information content carried by the first channel includes:
transmitting the SRS-Pos on the overlapped OFDM symbols, and dropping the first channel in the case that the first channel carries only first reporting information;
wherein the first reporting information is any one of the following information:
a semi-persistent CSI or periodic CSI reporting information;
semi-persistent layer 1 reference signal received power (L1-RSRP) or periodic L1-RSRP reporting information;
layer 1 signal to interference plus noise ratio (L1-SINR) reporting information.

29. The signal processing method according to claim 28, wherein the UCI comprises: at least one of HARQ-ACK, LRR or SR.

30. The signal processing method according to any one of claims 3-5 and 7-22, wherein the SRS-Pos is an aperiodic SRS-Pos.

31. A signal processing method, applied to a network node, comprising:
configuring indication information, and obtaining DCI according to the indication information;
transmitting the DCI to a terminal;
wherein, the indication information includes at least one of first indication information and second indication information;
the first indication information is used to indicate whether a positioning delay requirement is at least one of high precision and low delay;
the second indication information is used to indicate a priority of the first channel;
OFDM symbols occupied by the first channel overlap OFDM symbols occupied by an uplink positioning reference signal SRS-Pos;
the first channel includes: PUSCH and/or PUCCH.

32. The signal processing method according to claim 31, wherein before obtaining the DCI according to the indication information, the method further includes:
configuring whether the indication information appears in the DCI through RRC signaling.

33. The signal processing method according to claim 31, wherein the first indication information is represented by at least 1 bit; and/or
the second indication information is represented by at least 1 bit.

34. The signal processing method according to claim 33, wherein, in the case that a bit value of the bit occupied by the first indication information is configured as 1, it indicates that the positioning delay requirement is at least one of high precision and low delay;
in the case that the bit value of the bit is configured as 0, it indicates that the positioning delay requirement is not at least one of high precision and low delay.

35. The signal processing method according to claim 33, wherein, when the bit value of the bit occupied by the second indication information is configured as 1, it indicates that the first channel has a high priority;
when the bit value of the bit occupied by the second indication information is configured as 0, it indicates that the first channel does not have a high priority.

36. A terminal comprising a memory, a processor, a transceiver and a computer program stored on the memory and executed by the processor; wherein the processor implements the following steps when executing the program:
determining to drop Sounding Reference Signal-Position (SRS-Pos) or a first channel on overlapped Orthogonal Frequency Division Multiplexing (OFDM) symbols according to first information in the case that Orthogonal Frequency Division Multiplexing (OFDM) symbols occupied by an uplink positioning reference signal Sounding Reference Signal-Position (SRS-Pos) overlap OFDM symbols occupied by the first channel;
wherein, the first channel includes: a physical uplink shared channel (PUSCH) and/or a physical uplink control channel (PUCCH);
the first information includes: at least one of a resource type of the SRS-Pos, a content carried by the first channel, or indication information configured by a network node;
the indication information is related to dropping a signal on the overlapped OFDM symbols.

37. The terminal according to claim 36, wherein the processor is specifically configured to:
transmit the SRS-Pos on the overlapped OFDM symbols, and drop the first channel in the case that the resource type is an aperiodic type; and/or,
transmit the first channel on the overlapped OFDM symbols, and drop the SRS-Pos in the case that the resource type is a periodic type or a semi-persistent type, or the resource type is not configured.

38. The terminal according to claim 36, wherein the processor is specifically configured to:
determine to drop the SRS-Pos or the first channel on overlapped OFDM symbols according to whether the first channel carries uplink control information (UCI); or
determine to drop the SRS-Pos or the first channel on overlapped OFDM symbols according to reporting information content carried by the first channel.

39. The terminal according to claim 38, wherein the processor is specifically configured to:
transmit the SRS-Pos on the overlapped OFDM symbols, and drop the first channel in the case that the first channel only carries first report information;
wherein, the first reporting information is any one of the following information:
semi-persistent channel state indication (CSI) or periodic CSI reporting information;
semi-persistent layer 1 reference signal received power (L1-RSRP) or periodic L1-RSRP reporting information;
layer 1 signal to interference plus noise ratio (L1-SINR) reporting information.

40. The terminal according to claim 36, wherein the indication information comprises:
first indication information; or,
second indication information; or,
the first indication information and the second indication information; or,
the first indication information, the second indication information and third indication information;
wherein the first indication information is used to indicate whether a positioning delay requirement is at least one of high precision and low delay;
the second indication information is used to indicate a priority of the first channel;
the third indication information is used to indicate priorities of the first indication information and the second indication information.

41. A network node comprising a memory, a processor, a transceiver, and a computer program stored on the memory and executed by the processor; wherein the processor implements the following steps when executing the program:
configuring indication information, and obtaining DCI according to the indication information;
transmitting the DCI to a terminal;
wherein, the indication information includes at least one of first indication information and second indication information;
the first indication information is used to indicate whether a positioning delay requirement is at least one of high precision and low delay;
the second indication information is used to indicate a priority of the first channel;
OFDM symbols occupied by the first channel overlap OFDM symbols occupied by an uplink positioning reference signal SRS-Pos;
the first channel includes: PUSCH and/or PUCCH.

42. A computer-readable storage medium on which a computer program is stored, wherein the program, when executed by a processor, implements the steps of the signal processing method according to any one of claims 1 to 35.

43. A signal processing device, applied to a terminal, comprising:
a first determination module, configured to determine to drop Sounding Reference Signal-Position (SRS-Pos) or a first channel on overlapped Orthogonal Frequency Division Multiplexing (OFDM) symbols according to first information in the case that Orthogonal Frequency Division Multiplexing (OFDM) symbols occupied by an uplink positioning reference signal Sounding Reference Signal-Position (SRS-Pos) overlap OFDM symbols occupied by the first channel;
wherein, the first channel includes: a physical uplink shared channel (PUSCH) and/or a physical uplink control channel (PUCCH);
the first information includes: at least one of a resource type of the SRS-Pos, a content carried by the first channel, or indication information configured by a network node;
the indication information is related to dropping a signal on the overlapped OFDM symbols.

44. A signal processing device, applied to a network node, comprising:
a third processing module, configured to configure indication information, and obtaining DCI according to the indication information;
a first transmitting module, configured to transmit the DCI to a terminal;
wherein, the indication information includes at least one of first indication information and second indication information;
the first indication information is used to indicate whether a positioning delay requirement is at least one of high precision and low delay;
the second indication information is used to indicate a priority of the first channel;
OFDM symbols occupied by the first channel overlap OFDM symbols occupied by an uplink positioning reference signal SRS-Pos;
the first channel includes: PUSCH and/or PUCCH.
